(19) Europäisches Patentamt
European Patent Office
Office européen des brevets

(11) **EP 4 753 225 A1**

(12) **EUROPEAN PATENT APPLICATION**
published in accordance with Art. 153(4) EPC

(43) Date of publication:
**03.06.2026   Bulletin 2026/23**

(21) Application number: **24846113.9**

(22) Date of filing: **23.07.2024**

(51) International Patent Classification (IPC):
**H04L 41/16** (2022.01)        **G06N 3/0464** (2023.01)
**H04L 5/00** (2006.01)

(52) Cooperative Patent Classification (CPC):
**G06N 3/0464; H04L 5/00; H04L 41/16**

(86) International application number:
**PCT/KR2024/095933**

(87) International publication number:
**WO 2025/023813 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **26.07.2023   KR 20230097550**

(71) Applicant: **LG Electronics Inc.**
**Yeongdeungpo-gu**
**Seoul 07336 (KR)**

(72) Inventors:
• **PARK, Haewook**
  **Seoul 06772 (KR)**
• **KANG, Jiwon**
  **Seoul 06772 (KR)**
• **KIM, Hyungtae**
  **Seoul 06772 (KR)**
• **KIM, Seonwook**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR SIGNAL TRANSMISSION AND RECEPTION IN WIRELESS COMMUNICATION SYSTEM**

(57)    : A method performed by a terminal in a wireless communication system according to at least one of the embodiments disclosed in the present specification may comprise the steps of: acquiring configurations for artificial intelligence/machine learning (AI/ML) models on the basis of higher layer signaling; monitoring one or more of the AI/ML models; and, on the basis of the monitoring of the one or more AI/ML models, performing AI/ML model management for switching or updating. The monitoring of the one or more AI/ML models includes at least one of the monitoring of a first AI/ML model in an inactive state or the monitoring of a second AI/ML model in an active state. The monitoring of the first AI/ML model in the inactive state may occupy fewer terminal processing units or occupy the terminal processing units for a shorter period of time than the monitoring of the second AI/ML model in the active state.

**FIG. 20**

## Description

### TECHNICAL FIELD

The disclosure relates to a wireless communication system, and more particularly, to a method and apparatus for transmitting/receiving an uplink/downlink wireless signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### Technical Problem

An object of the present disclosure is to provide a method and device for performing a process of transmitting and receiving a wireless signal more accurately and efficiently.

The objects to be obtained are not limited thereto, and other objects may be inferred from the disclosure of this specification.

### Technical Solution

In an aspect of the present disclosure, provided herein is a method performed by a user equipment (UE) in a wireless communication system. The method may include: obtaining configurations for artificial intelligence/machine learning (AI/ML) models based on higher layer signaling; monitoring at least one of the AI/ML models; and performing AI/ML model management for switching or updating based on monitoring the at least one AI/ML model. Monitoring the at least one AI/ML model may include at least one of: monitoring a first AI/ML model in an inactive state; and monitoring a second AI/ML model in an active state. Monitoring the first AI/ML model in the inactive state may occupy a UE processing unit for a shorter duration than monitoring the second AI/ML model in the active state or may occupy fewer UE processing units than monitoring the second AI/ML model in the active state.

The first AI/ML model to be monitored among AI/ML models in the inactive state may be determined based on network signaling.

A start of a time duration during which the UE processing unit is occupied by monitoring the first AI/ML model may be determined based on a time point at which the network signaling is received.

An end of a time duration during which the UE processing unit is occupied by monitoring the first AI/ML model may be determined based on at least one of: i) a time point at which a result of monitoring the first AI/ML model is reported; ii) a time point at which a network response to the report is received; or iii) a time point at which a predetermined timer expires.

The first AI/ML model to be monitored among AI/ML models in the inactive state may be determined by the UE.

Based on an operation for the second AI/ML model in the active state being triggered through network signaling, monitoring the AI/ML model in the inactive state may be stopped or suspended.

The UE may report information on an occupied state or an unoccupied state of the UE processing unit to a network.

Monitoring the first AI/ML model may be performed based on remaining UE processing units that are not occupied by the second AI/ML model in the active state.

The second AI/ML model in the active state may occupy the UE processing unit with a higher priority than the first AI/ML model in the inactive state.

Monitoring the second AI/ML model in the active state may occupy one UE processing unit, and monitoring the first AI/ML model in the inactive state may occupy $n$ UE processing units, where $n$ may be a real number greater than 0 and less than or equal to 1.

In this case, $n$ may be determined based on UE capability or may be provided through network signaling.

In another aspect of the present disclosure, provided herein is a computer-readable recording medium having recorded thereon a program for executing the above-described method.

In another aspect of the present disclosure, provided herein is a user equipment (UE) in a wireless communication system. The UE may include: a transceiver; and a processor configured to control the transceiver. The processor may be configured to: obtain configurations for artificial intelligence/machine learning (AI/ML) models based on higher layer signaling; monitor at least one of the AI/ML models; and perform AI/ML model management for switching or updating based on monitoring the at least one AI/ML model. Monitoring the at least one AI/ML model may include at least one of: monitoring a first AI/ML model in an inactive state; and monitoring a second AI/ML model in an active state. Monitoring the first AI/ML model in the inactive state may occupy a UE processing unit for a shorter duration than monitoring the second AI/ML model in the active state or may occupy fewer UE processing units than monitoring the second AI/ML model in the active state.

In a further aspect of the present disclosure, provided herein is an apparatus configured to control a user equipment (UE) in a wireless communication system. The apparatus may include: a memory configured to store instructions; and a processor configured to perform operations for controlling the UE by executing the instructions. The operations for controlling the UE may include: obtaining configurations for artificial intelligence/machine learning (AI/ML) models based on higher layer signaling; monitoring at least one of the AI/ML models; and performing AI/ML model management for switching or updating based on monitoring the at least one AI/ML model. Monitoring the at least one AI/ML model may include at least one of: monitoring a first AI/ML model in an inactive state; and monitoring a second AI/ML model in an active state. Monitoring the first AI/ML model in the inactive state may occupy an apparatus processing unit for a shorter duration than monitoring the second AI/ML model in the active state or may occupy fewer apparatus processing units than monitoring the second AI/ML model in the active state.

## Advantageous Effects

According to an embodiment, wireless signal transmission and reception may be efficiently performed in a wireless communication system.

Other effects not mentioned above can be inferred from the description.

## BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary physical downlink shared channel (PDSCH) and ACK/NACK transmission and reception process.
FIG. 6 illustrates an exemplary physical uplink shared channel (PUSCH) transmission process.
FIG. 7 shows an example of a channel state information (CSI) related procedure.
FIG. 8 is a view for explaining a concept of artificial intelligence/machine learning (AI/ML)/deep learning.
FIGS. 9 to 12 show various AI/ML models of deep learning.
FIG. 13 is a diagram illustrating split AI inference.
FIG. 14 is a diagram illustrating a framework for 3GPP radio access network (RAN) intelligence.
FIGS. 15 to 17 illustrate AI model training and inference environments.
FIG. 18 is a diagram for explaining AI-based CSI feedback.
FIG. 19 is a diagram for explaining operations of a network and a user equipment (UE) in a wireless communication system according to an embodiment.
FIG. 20 illustrates a flow of a method performed by a UE according to an embodiment.
FIGS. 21 to 24 illustrate an example of a communication system 1 and wireless devices applied to the disclosure.

## DETAILED DESCRIPTION

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least a part of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

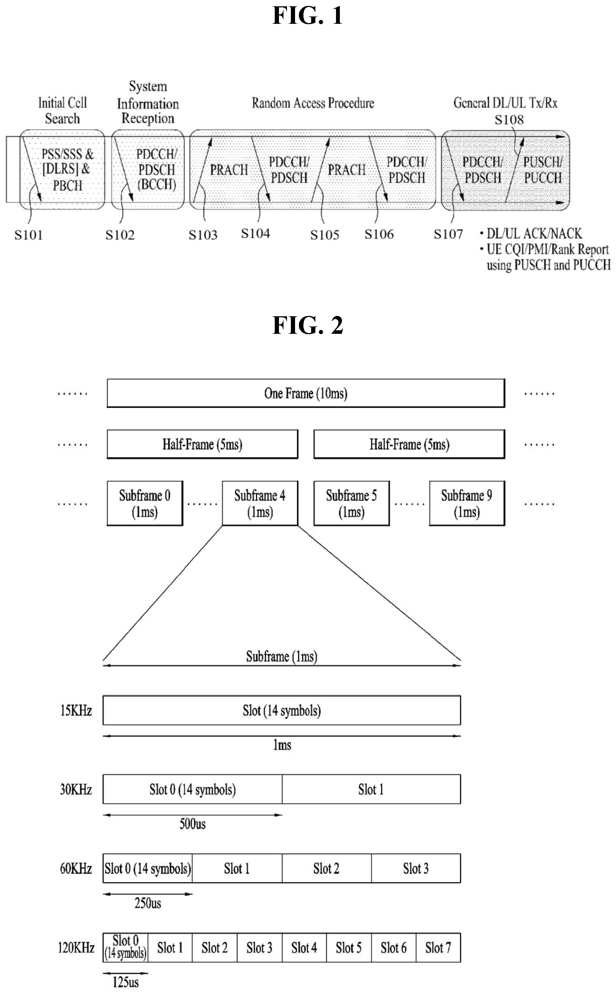

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{stot}_{symb}$: Number of symbols in a slot
$N^{frame,u}_{slot}$: Number of slots in a frame
$N^{subframe,u}_{slot}$: Number of slots in a subframe

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

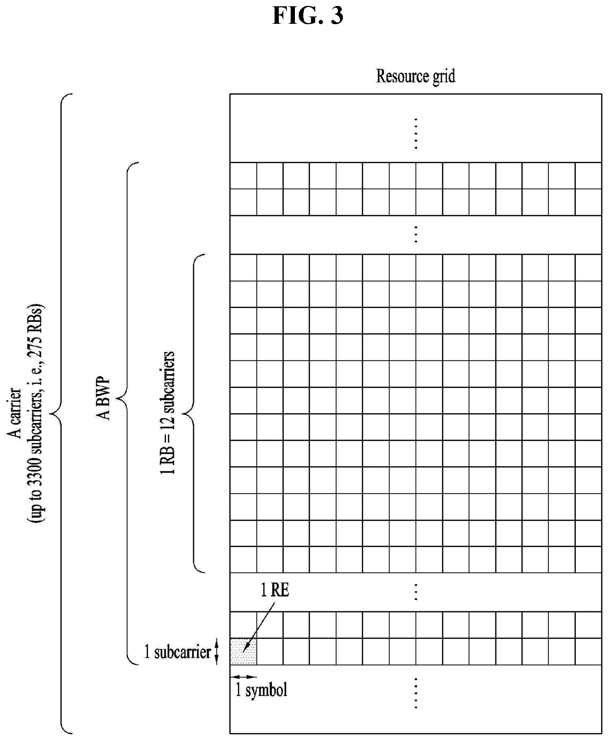

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

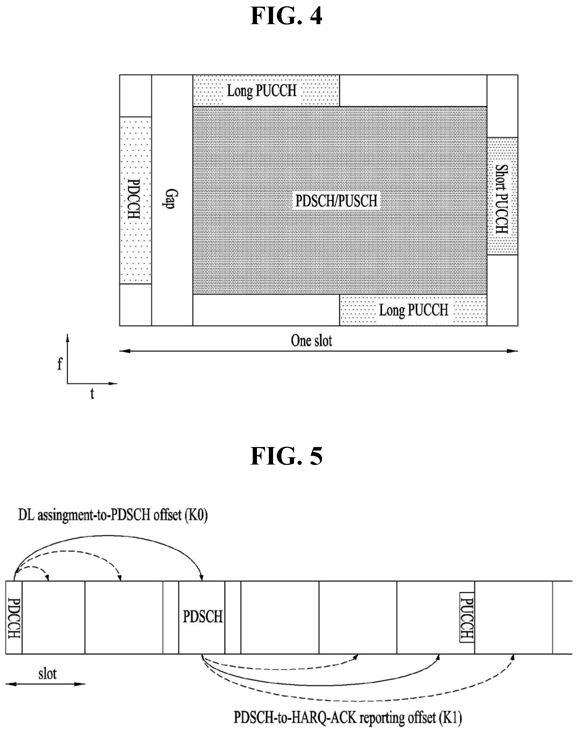

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.

- monitoringSlotPeriodicityAndOffset: A PDCCH monitoring periodicity (in slots) and a PDCCH monitoring offset (in slots).

- monitoringSymbolsWithinSlot: PDCCH monitoring symbols in a slot (e.g., the first symbol(s) of a CORESET).

- nrofCandidates: The number of PDCCH candidates (one of 0, 1, 2, 3, 4, 5, 6, and 8) for each AL={1, 2, 4, 8, 16}.

* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|------|-------------|------|----------|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0 0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2 0 | Notifying a group of UEs of the slot format |
| 2_1 | Notifying a group of UEs of the PRB(s) and OFDM symbol(s) where UE may assume no transmission is intended for the UE |
| 2 2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR (Scheduling Request): Information used to request UL-SCH resources.

- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1 - 2 | ≤2 | HARQ, SR | Sequence selection |

(continued)

| PUCCH format | Length in OFDM symbols $N_{\text{symb}}^{\text{PUCCH}}$ | Number of bits | Usage | Etc |
|---|---|---|---|---|
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured in the UE may be configured for PUCCH transmission. At least the primary cell may be configured as a cell for PUCCH transmission. At least one PUCCH cell group may be configured in a UE based on at least one cell for which PUCCH transmission is configured, and each PUCCH cell group includes one or more cells. A PUCCH cell group may be simply referred to as a PUCCH group. PUCCH transmission may be configured for a SCell as well as the primary cell. The primary cell belongs to the primary PUCCH group, and the PUCCH-SCell to which PUCCH transmission is configured belongs to the secondary PUCCH group. The PUCCH on the primary cell may be used for cells belonging to the primary PUCCH group, and the PUCCH on the PUCCH-SCell may be used for cells belonging to the secondary PUCCH group.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH.
- Time domain resource assignment: Indicates K0 and the starting position (e.g. OFDM symbol index) and length (e.g. the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as a HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by a HARQ process ID.

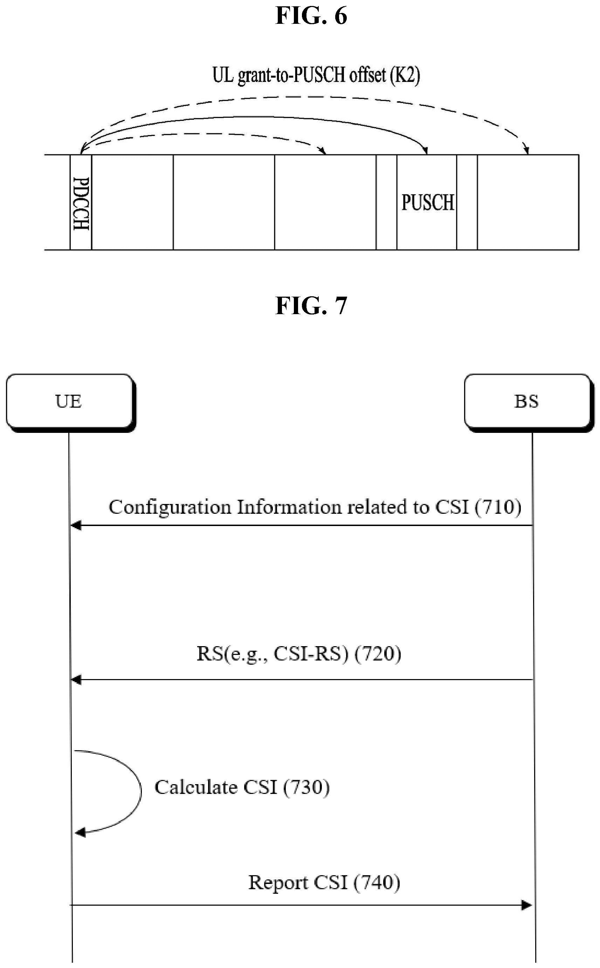

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

A CSI codebook (e.g., PMI codebook) defined in the NR specifications may be broadly classified into a Type I codebook and a Type II codebook. The Type I codebook mainly targets single user MIMO (SU-MIMO) that supports both a high order and a low order. The Type II codebook primarily supports multi-user MIMO (MU-MIMO), which is capable of handling a maximum of two layers. While the Type II codebook is capable of providing more accurate CSI compared to Type I, the Type II codebook may also increase signaling overhead. On the other hand, an Enhanced Type II codebook is introduced to address the CSI overhead issues associated with the existing Type II codebook. The Enhanced Type II codebook may reduce the payload of the codebook by considering the correlation in the frequency domain.

CSI reporting over a PUSCH may be configured as Part 1 and Part 2. Part 1 has a fixed payload size and is used to identify the number of information bits in Part 2. Part 1 is fully transmitted before Part 2.

- For the Type I CSI feedback, Part 1 includes an RI (if reported), a CRI (if reported), and the CQI of a first codeword. Part 2 includes a PMI, and when RI > 4, Part 2 also includes the CQI.
- For the Type II CSI feedback, Part 1 includes an RI (if reported), a CQI, and an indication of the number of non-zero WB amplitude coefficients for each layer of Type II CSI. Part 2 includes the PMI of the Type II CSI.
- For the Enhanced Type II CSI feedback, Part 1 includes an RI (if reported), a CQI, and an indication of the total number of non-zero WB amplitude coefficients for all layers of Enhanced Type II CSI. Part 2 includes the PMI of the Enhanced Type II CSI.
- For the PUSCH, CSI reporting includes two parts. If the CSI payload to be reported is smaller than a payload size provided by PUSCH resources allocated for CSI reporting, the UE may drop parts of the Part 2 CSI.

Semi-persistent CSI reporting performed with PUCCH format 3 or 4 supports Type II CSI feedback but supports only Part 1 of Type II CSI feedback.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of TCI-state configurations may be configured in the UE through a higher layer parameter PDSCH-Config. Each TCI-state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Beam Management (BM)

The BM refers to a series of processes for acquiring and maintaining a set of BS beams (transmission and reception point (TRP) beams) and/or a set of UE beams available for DL and UL transmission/reception. The BM may include the following processes and terminology.

- Beam measurement: an operation by which the BS or UE measures the characteristics of a received beamformed signal
- Beam determination: an operation by which the BS or UE selects its Tx/Rx beams
- Beam sweeping: an operation of covering a spatial domain by using Tx and/or Rx beams for a prescribed time interval according to a predetermined method
- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

Artificial intelligence/machine learning (AI/ML)

With the technological development of AI/ML, node(s) and UE(s) constituting a wireless communication network are becoming intelligent/advanced, and in particular, due to intelligence of a network/BS, it is expected that various network/BS determination parameter values (e.g., transmission and reception power of each BS, transmission power of each UE, precoder/beam of BS/UE, time/frequency resource allocation for each UE, or a duplex method of BS) are rapidly optimized and derived/applied according to various environmental parameters (e.g., distribution/location of BSs, distribution/location/material of building/furniture, location/moving direction/speed of UEs, and climate information). In line with this trend, many standardization organizations (e.g., 3GPP or O-RAN) consider introduction of the network/BS determination parameter values, and research on this is also actively underway.

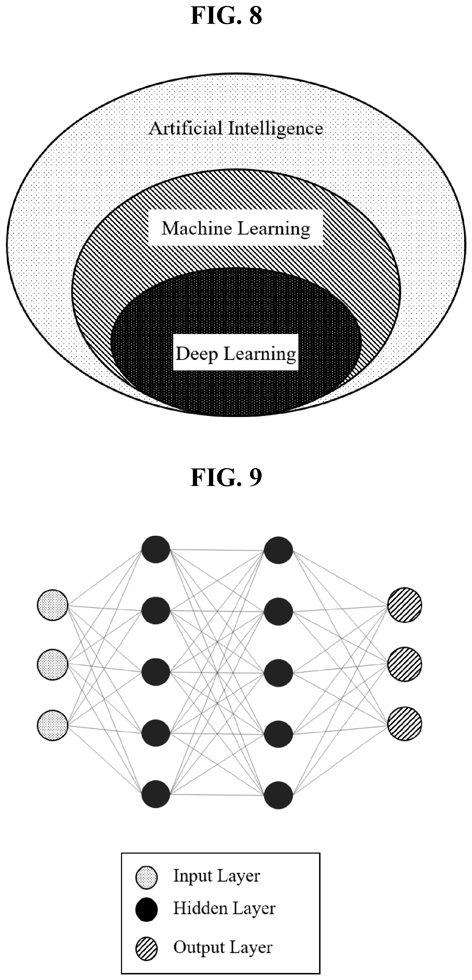

In a narrow sense, AI/ML may be easily referred to as deep learning-based artificial intelligence, but is conceptually shown in FIG. 8.

- Artificial intelligence: This may correspond to all automation by which machines replace a human work.
- Machine learning: Without explicitly programming rules, machines may learn patterns for decision-making on their own from data.
- Deep learning: This is an artificial neural network-based AI/ML model in which a machine performs all at once from unstructured data to feature extraction and determination and an algorithm depends upon a biological nervous system, that is, a multi-layer network of interconnected nodes for feature extraction and transformation inspired by a neural network. A common deep learning network architecture may include deep neural networks (DNNs), recurrent neural networks (RNNs) and convolutional neural networks (CNNs).

Classification of types of AI/ML according to various references

1. Offline vs Online

(1) Offline Learning: This complies with a sequential procedure of database collection, learning, and prediction. In other words, collection and learning are performed offline, and the completed program may be installed in the field and used for prediction. In most situations, this offline learning method is used. In offline learning, the system does not learn incrementally. Instead, learning is performed using all available collected data, and the results are applied without further learning. If learning on new data becomes necessary, learning may be initiated again using new complete data.
(2) Online Learning: Online learning is a method of improving performance little by little by incrementally learning with additionally generated data based on the fact that data to be used for learning is continuously generated recently through the Internet. Real-time learning is performed on specific units of data (batches) collected online, thereby allowing the system to quickly adapt to varying data.

To build an AI system, learning may be performed solely through online learning using only data generated in real-time. Alternatively, after conducting offline learning using a specific data set, additional learning may be performed using subsequently generated real-time data (online + offline learning).

2. Classification according to AI/ML Framework concept

(1) Centralized Learning: When training data collected from a plurality of different nodes is reported to a centralized node, all data resources/storage/learning (e.g., supervised, unsupervised, and reinforcement learning) are performed by one central node.
(2) Federated Learning: A collective AI/ML model is configured based on data across decentralized data owners. Instead of using data into an AI/ML model, a local node/individual device collects data and a train a copy of the AI/ML model thereof, and thus it is not required to report source data to a central node. In federated learning, a parameter/weight of the AI/ML model may be transmitted back to the centralized node to support general AI/ML model training. An advantage of federated learning includes increased computation speed and superiority in terms of information security. That is, a process of uploading personal data to a central server is unnecessary, and leakage and abuse of personal information may be prevented.
(3) Distributed Learning: The machine learning process represents a concept that is scaled and deployed across a cluster of nodes. A training AI/ML model is split and shared across multiple nodes operating concurrently to speed up AI/ML model training.

3. Classification according to learning method

(1) Supervised Learning: Supervised learning is a machine learning task that aims to learn a mapping function from input to output when a labeled data set is given. The input data is called training data and has known labels or outcomes. An example of the supervised learning may include (i) Regression: Linear Regression, Logistic Regression, (ii) Instance-based Algorithms: k-Nearest Neighbor (KNN), (iii) Decision Tree Algorithms: CART, (iv) Support Vector Machines: SVM, (v) Bayesian Algorithms: Naive Bayes, and (vi) Ensemble Algorithms: Extreme Gradient Boosting, Bagging: Random Forest. The supervised learning may be further grouped due to regression and classification problems, and classification predicts a label and regression predicts a quantity.

(2) Unsupervised Learning: This is a machine learning task that aims to learn a function that describes a hidden structure in unlabeled data. Input data is unlabeled and has no known results. Some examples of unsupervised learning include K-means clustering, principal component analysis (PCA), nonlinear independent component analysis (ICA), and LSTM.

(3) Reinforcement Learning: In reinforcement learning (RL), an agent aims to optimize a long-term goal by interacting with an environment based on a trial-and-error process, which is goal-oriented learning based on an interaction with the environment. Examples of an RL algorithm may include (i) Q-learning, (ii) Multi-armed bandit learning, (iii) Deep Q Network, State-Action-Reward-State-Action (SARSA), (iv) Temporal Difference Learning, (v) Actor-critic reinforcement learning, (vi) Deep deterministic policy gradient, and (vii) Monte-Carlo tree search. The RL may be further grouped into AI/ML model-based RL and AI/ML model-free RL. Model-based RL is an RL algorithm that uses a predictive AI/ML model to obtain transition probabilities between states using various dynamic states of the environment and an AI/ML model in which these states lead to rewards. Model-free RL is a value- or policy-based RL algorithm that achieves maximum future reward, which is less computationally complex in multi-agent environments/states and does not require accurate representation of the environment. The RL algorithm may also be classified into value-based RL versus policy-based RL, policy-based RL versus non-policy RL, and the like.

AI/ML models

FIG. 9 shows an example of a feed-forward neural network (FFNN) AI/ML model. Referring to FIG. 9, the FFNN AI/ML model includes an input layer, a hidden layer, and an output layer.

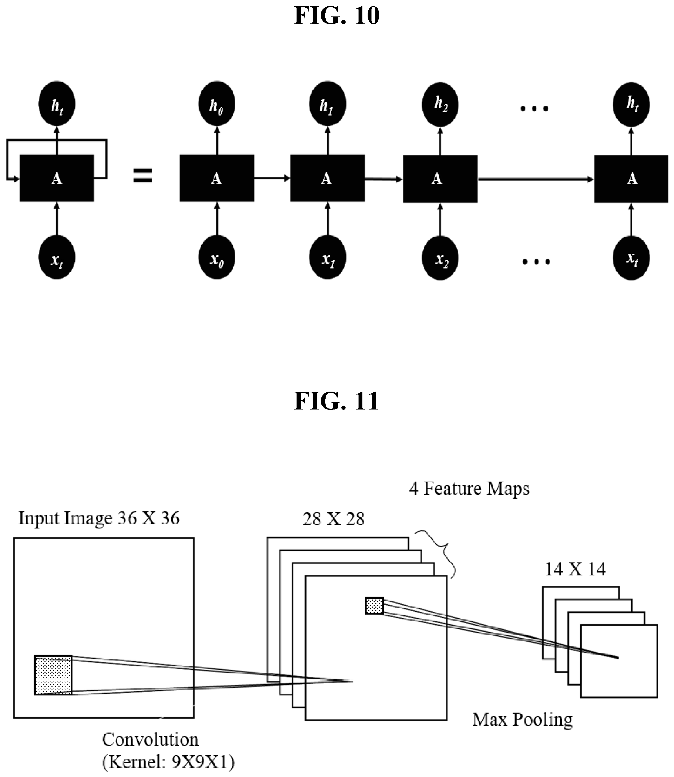

FIG. 10 shows an example of a recurrent neural network (RNN) AI/ML model. Referring to FIG. 10, the RNN AI/ML model is a type of artificial neural network in which a hidden node is connected to a directed edge to form a directed cycle and is an AI/ML model suitable for processing sequentially appearing data such as voice or text. One type of the RNN is a long short-term memory (LSTM), and the LSTM is a structure in which a cell-state is added to a hidden state of the RNN. In detail, in the LSTM, an input gate, a forget gate, and an output gate are added to the RNN cell, and a cell state is added. In Equation 10, A represents a neural network, $x_t$ denotes an input value, and $h_t$ denotes an output value. Here, $h_t$ may represent the current state value based on time, while $h_{t-1}$ may represent the previous state value.

FIG. 11 shows a convolution neural network (CNN) AI/ML model. The CNN is used for two purposes including reduction in AI/ML model complexity and extraction of good features by applying convolution computation commonly used in a video processing or image processing field. Referring to FIG. 11, a kernel or a filter means a unit/structure that applies a weight to an input in a specific range/unit. The kernel (or filter) may be modified through learning. A stride is a movement range in which the kernel is moved within the input. A feature map is the result of applying a kernel to an input. Padding refers to a value added to adjust the size of the feature map. To encourage robustness against distortion and changes, multiple feature maps may be extracted. Pooling refers to computation (e.g., max pooling or average pooling) to reduce the size of the feature map by downsampling the feature map.

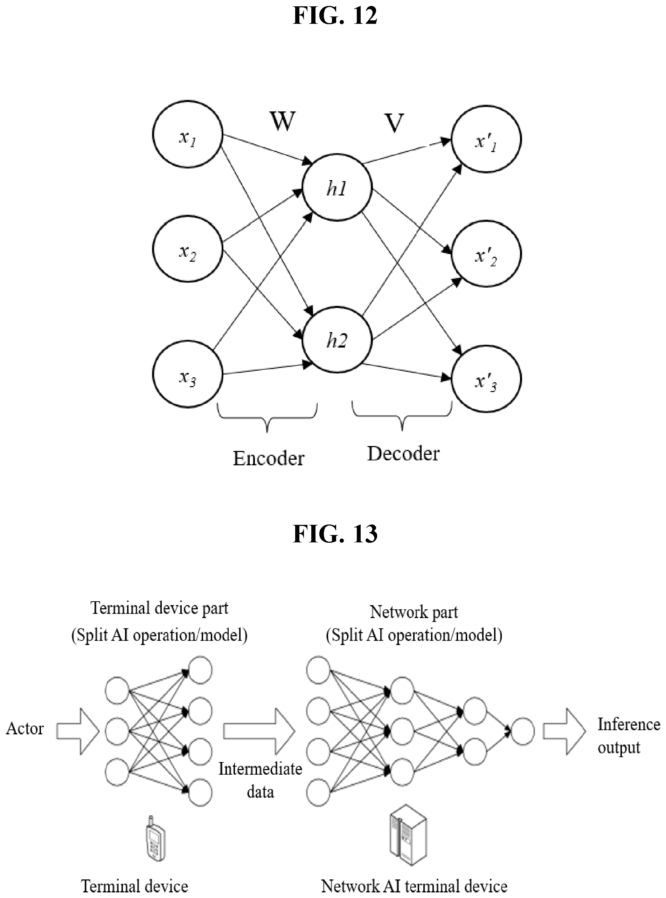

FIG. 12 shows an auto-encoder AI/ML model. Referring to FIG. 12, the auto-encoder is a neural network that receives a feature vector x and outputs the same or similar vector x' and a type of unsupervised learning with input and output nodes having the same feature. An autoencoder reconstructs the input, and thus, the output may be referred to as reconstruction. A loss function may be represented according to Equation 1 below.

[Equation 1]

$$\arg \min_{W,V} \left\| x - g(f(x)) \right\|^2, where \ \mathbf{h} = \mathrm{f}(\mathbf{x}) = \mathbf{Wx}, \mathbf{x}' = \mathrm{g}(\mathbf{h}) = \mathbf{Vh}$$

In Equation 12, the loss function of the autoencoder is calculated based on the difference between the input and output. Based on the loss function of the autoencoder, the degree of loss in the input is assessed, and an optimization process is applied to the autoencoder to minimize the loss.

FIG. 13 is a diagram illustrating split AI inference.

FIG. 13 illustrates a case where a model inference function is collaboratively performed between an end devices such as a UE and a network AI/ML endpoint during the split AI operation.

In addition to the model inference function, a model training function, actor, and data collection function may each be split into multiple parts based on the current task and environment. These functions may be executed through the collaboration of multiple entities.

For example, computation-intensive and energy-intensive parts may be performed at the network endpoint, while privacy-sensitive and latency-sensitive parts may be executed on the end device. In this case, the end device executes tasks/models up to a specific part/layer based on input data and then transmits intermediate data to the network endpoint. The network endpoint executes the remaining parts/layers and provides inference outputs to one or more devices performing the operations/tasks.

The following describes a functional framework for AI operations.

Herein, the following terms may be defined for more detailed explanations of AI (or AI/ML).

- Data collection: Data collected from network nodes, management entities, or UEs, which serves as the foundation for AI model training, data analysis, and inference.
- AI model: A data-driven algorithm where AI techniques are applied to generate a set of outputs, including predictive information and/or decision parameters, based on a set of inputs.
- AI/ML training: An online or offline process of training an AI model by learning features and patterns to best represent data and obtain an AI/ML model trained for inference.
- AI/ML inference: A process that uses a trained AI model to make predictions or derive decisions based on collected data and the AI model.

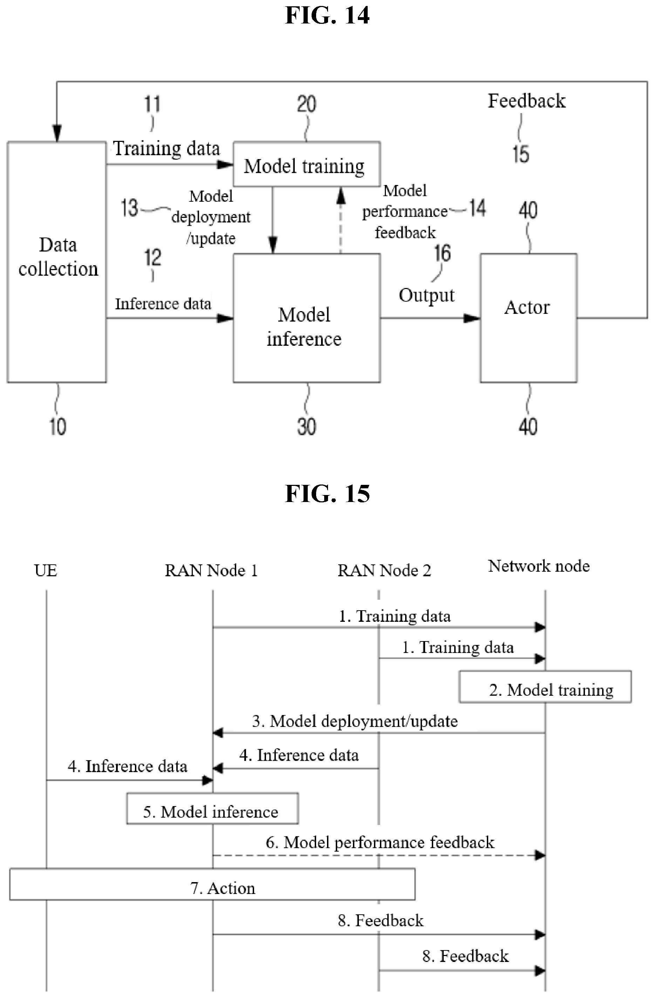

Referring to FIG. 14, a data collection function 10 collects input data and provides the processed input data to a model training function 20 and a model inference function 30.

For example, the input data may include measurements from UEs or other network entities, feedback from actors, and outputs from AI models.

The data collection function 10 performs data preparation based on the input data and provides the input data processed through the data preparation. Here, the data collection function 10 does not perform specific data preparation (e.g., data pre-processing and cleaning, forming, and transformation) for each AI algorithm, but the data collection function 10 may perform data preparation common to AI algorithms.

After completing the data preparation process, the data collection function 10 provides training data 11 to the model training function 20 and provides inference data 12 to the model inference function 30. Here, the training data 11 is input data required for the AI model training function 20. The inference data 12 is input data required for the AI model inference function 30.

The data collection function 10 may be performed by a single entity (e.g., UE, RAN node, network node, etc.) or by multiple entities. In this case, the training data 11 and inference data 12 may be provided to the model training function 20 and model inference function 30 respectively from multiple entities.

As part of the AI model testing procedure, the model training function 20 is responsible for performing AI model training, validation, and testing necessary to generate model performance metrics. If necessary, the model training function 20 may handle data preparation (e.g., data pre-processing and cleaning, forming, and transformation) based on the training data 11 provided by the data collection function 10.

Here, a model deployment/update 13 is used to initially deploy the trained, validated, and tested AI model to the model inference function 30 or to provide the updated model to the model inference function 30.

The model inference function 30 is responsible for providing an AI model inference output 16 (e.g., predictions or decisions). If applicable, the model inference function 30 may also provide model performance feedback 14 to the model training function 20. Additionally, the model inference function 30 may handle data preparation (e.g., data pre-processing and cleaning, forming, and transformation) based on the inference data 12 provided by the data collection function 10 if necessary.

Here, the output 16 refers to the inference output of the AI model generated by the model inference function 30, and the details of the inference output may vary depending on the use case.

The model performance feedback 14 may be used to monitor the performance of the AI model when available. However, the feedback may be omitted.

An actor function 40 receives the output 16 from the model inference function 30 and triggers or performs related tasks/operations. The actor function 40 may trigger tasks/operations for other entities (e.g., one or more UEs, one or more RAN nodes, one or more network nodes, etc.) or for itself.

Feedback 15 may be used to derive the training data 11 and inference data 12 or to monitor the performance of the AI model, the impact on the network, and so on.

The definitions of training, validation, and testing in a data set used in AI/ML may be distinguished as follows:

- Training data: The training data refers to a data set used for training a model.
- Validation data: The validation data refers to a data set used to validate a model that has already been trained. In other words, the validation data means a data set used to prevent overfitting of a typical training data set.

Additionally, the validation data refers to a data set used to select the best model among several trained models during the training process. Thus, the validation data may also be considered a type of learning.

- Test data: The test data refers to a data set used for final evaluation. The test data is independent of training.

In the case of the aforementioned data set, it is common to split a training set such that the training data and validation data are divided in a ratio of 8:2 or 7:3. When the test data is included, the training data, validation data, and test data may be divided in a ratio of 6:2:2 (training: validation: test).

Collaboration levels may be defined as follows, depending on the capability of the AI/ML functions between the BS and UE. It is also possible to combine multiple levels or to modify the levels by separating any one level.

Cat 0a) No Collaboration Framework: AI/ML algorithms are purely implementation-based and do not require changes to a wireless interface.

Cat 0b) This level involves a modified wireless interface suitable for efficient implementation-based AI/ML algorithms, but the level corresponds to a framework without collaboration.

Cat 1) Support between nodes is provided to enhance the AI/ML algorithm of each node. This level is applied when the UE receives support from the gNB (for training, adaptation, etc.), and vice versa. At this level, model exchange between network nodes is not required.

Cat 2) Collaborative ML tasks may be performed between the UE and gNB. This level requires the exchange of AI/ML model commands between network nodes.

The functions illustrated in FIG. 14 may be implemented in RAN nodes (e.g., BSs, TRPs, central units (CUs) of BSs), network nodes, operation administration maintenance (OAM) of network operators, or UEs.

Alternatively, two or more entities among the RAN nodes, network nodes, OAM of network operators, or UEs may collaborate to implement the functions illustrated in FIG. 14. For example, one entity may perform some of the functions in FIG. 14, while another entity may perform the remaining functions. In this way, if some of the functions illustrated in FIG. 14 are performed by a single entity (e.g., a UE, RAN node, or network node), the transfer/provision of data/information between individual functions may be omitted. For instance, if the model training function 20 and model inference function 30 are performed by the same entity, the transfer/provision of the model deployment/update 13 and model performance feedback 14 may be omitted.

Alternatively, any one of the functions illustrated in FIG. 14 may be performed through collaboration between two or more entities among the RAN nodes, network nodes, OAM of network operators, or UEs. This may be referred to as the split AI operation.

FIG. 15 illustrates a scenario where the AI model training function is performed by a network node (e.g., a core network node, OAM of a network operator, etc.), while the AI model inference function is performed by RAN nodes (e.g., BSs, TRPs, or CUs of BSs).

Step 1: RAN node 1 and RAN node 2 transmit input data for AI model training (i.e., training data) to the network node. Here, RAN node 1 and RAN node 2 may transmit data collected from a UE (e.g., UE measurements related to the RSRP, RSRQ, or SINR of serving and neighboring cells, UE location, speed, etc.) to the network node.

Step 2: The network node trains an AI model using the received training data.

Step 3: The network node deploys/updates the AI model to RAN node 1 and/or RAN node 2. RAN node 1 (and/or RAN node 2) may continue to perform model training based on the received AI model.

For the sake of convenience in explanation, it is assumed that the AI model is deployed/updated only to RAN node 1.

Step 4: RAN node 1 receives input data for AI model inference (i.e., inference data) from the UE and RAN node 2.

Step 5: RAN node 1 performs the AI model inference using the received inference data to generate output data (e.g., predictions or decisions).

Step 6: If applicable, RAN node 1 may transmit model performance feedback to the network node.

Step 7: RAN node 1, RAN node 2, and the UE (or RAN node 1 and UE, or RAN node 1 and RAN node 2) perform actions based on the output data. For example, in the case of a load balancing operation, the UE may move from RAN node 1 to RAN node 2.

Step 8: RAN node 1 and RAN node 2 transmit feedback information to the network node.

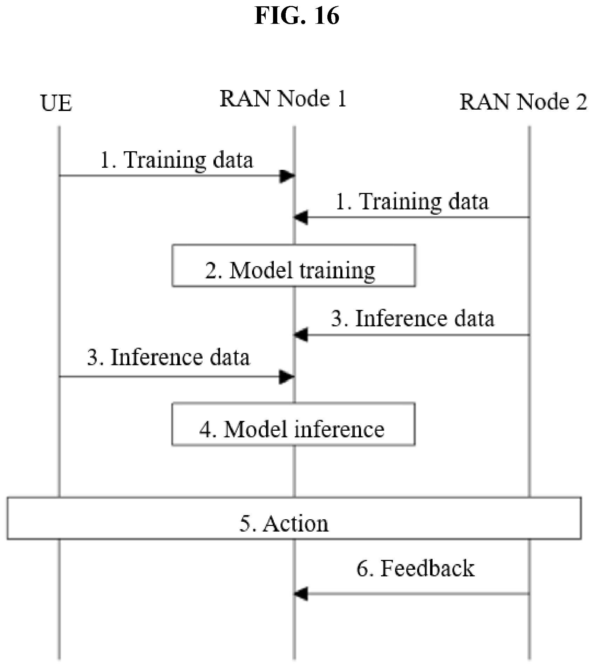

FIG. 16 illustrates a scenario where both the AI model training function and the AI model inference function are performed by RAN nodes (e.g., BSs, TRPs, or CUs of BSs).

Step 1: A UE and RAN node 2 transmit input data for AI model training (i.e., training data) to RAN node 1.

Step 2: RAN node 1 trains an AI model using the received training data.

Step 3: RAN node 1 receives input data for AI model inference (i.e., inference data) from the UE and RAN node 2.

Step 4: RAN node 1 performs the AI model inference using the received inference data to generate output data (e.g., predictions or decisions).

Step 5: RAN node 1, RAN node 2, and the UE (or RAN node 1 and UE, or RAN node 1 and RAN node 2) perform actions based on the output data. For example, in the case of a load balancing operation, the UE may move from RAN node 1 to RAN node 2.

Step 6: RAN node 2 transmits feedback information to RAN node 1.

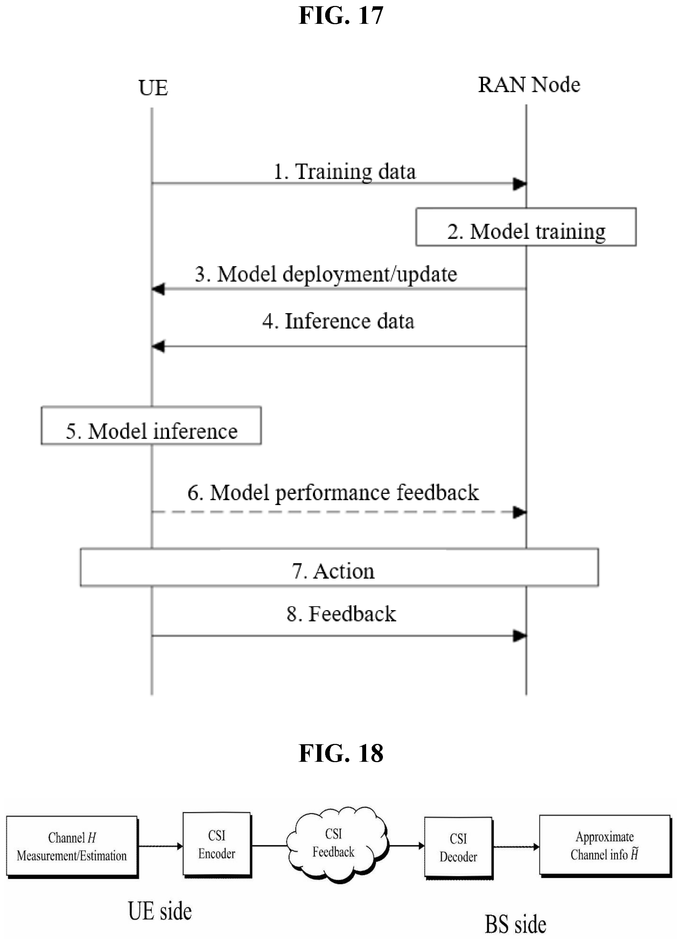

FIG. 17 illustrates a scenario where the AI model training function is performed by a RAN node (e.g., a BS, a TRP, or CUs of the BS), while the AI model inference function is performed by a UE.

Step 1: The UE transmits input data for AI model training (i.e., training data) to the RAN node. Here, the RAN node may collect data from various UEs and/or other RAN nodes (e.g., UE measurements related to the RSRP, RSRQ, or SINR of serving and neighboring cells, UE location, speed, etc.).

Step 2: The RAN node trains an AI model using the received training data.

Step 3: The RAN node deploys/updates the AI model to the UE. The UE may continue to perform model training based on the received AI model.

Step 4: The UE receives input data for AI model inference (i.e., inference data) from the RAN node (and/or from other UEs).

Step 5: The UE performs the AI model inference using the received inference data to generate output data (e.g., predictions or decisions).

Step 6: If applicable, the UE may transmit model performance feedback to the RAN node.

Step 7: The UE and RAN node perform actions based on the output data.

Step 8: The UE transmits feedback information to the RAN node.

## CPU occupation rule for AI/ML based CSI report

With the advancement of computing technologies and AI/ML technologies, nodes and UEs included in a wireless communication network are becoming more intelligent and sophisticated. In particular, due to the intelligence of the network, it is expected that various network decision parameter values (e.g., transmission and reception power of each BS, transmission power of each UE, precoders/beams for each BS/UE, time/frequency resource allocation for each UE, duplex modes of each BS, etc.) may be quickly optimized and applied based on various network environmental parameters (e.g., distribution/location of BSs, distribution/location/material of buildings/furniture, location/movement direction/speed of UEs, climate information, etc.).

Hereinafter, proposals for a CSI processing unit (CPU) when CSI reporting is performed in/by an evolved network/BS/UE based on AI/ML will be described.

FIG. 18 is a diagram for explaining AI-based CSI feedback.

In a method for reducing CSI feedback payload overhead, a common AI model may be based on compression at the UE and/or BS. For example, the CSI encoder of the UE and the CSI decoder of the BS may be assumed as shown in FIG. 18. The encoder and decoder may be related to autoencoders, and a convolutional neural network (CNN) may be used for efficient reduction of the channel size/dimension.

In AI/ML-based payload reduction, what is to be compressed is a critical factor. There are two main types of channel feedback: explicit feedback and implicit feedback. LTE and NR uses implicit feedback where an RI/CQI/PMI are reported to the BS, instead of reporting a raw channel matrix or channel covariance matrix. Implicit feedback has the advantage of lower feedback overhead compared to explicit feedback. When AI/ML is used for CSI payload reduction, information on a compressed raw channel may be fed back to the gNB, which may lead to explicit feedback.

As another example of AI/ML-based CSI feedback, compressing an existing PMI, for example, Type I and Type II CSI may be considered. In Rel-16/17 Type II CSI, linear-based vectors such as DFT vectors are used for compression in the frequency domain to reduce the payload of Rel-15 Type II CSI. Accordingly, AI/ML may be used to further reduce the payload of existing CSI and improve performance thereof.

As described above, AI/ML-based CSI reporting may be considered. Assuming that both the BS and UE have capabilities for AI/ML (training and/or inference), autoencoder-like CSI reporting may be performed. Alternatively, single-sided AI/ML (at the network or UE) may be considered. For single-sided AI/ML, an existing legacy codebook may be optimized based on AI/ML by considering specific parameter optimization (performance and/or payload).

For the generation/calculation of CSI (based on AI/ML), a CPU has been introduced in NR Rel.17 for the purpose of managing the CSI processor of the UE. Table 6 is an excerpt from TS 38.214 regarding the CPU.

[Table 6]

---

5.2.1.6 CSI processing criteria

The UE indicates the number of supported simultaneous CSI calculations $N_{CPU}$ with parameter *simultaneousCSI-ReportsPerCC* in a component carrier, and *simultaneousCSI-ReportsAllCC* across all component carriers. If a UE supports $N_{CPU}$ simultaneous CSI calculations it is said to have $N_{CPU}$ CSI processing units for processing CSI reports. If $L$ CPUs are occupied for calculation of CSI reports in a given OFDM symbol, the UE has $N_{CPU}$ - L unoccupied CPUs. If $N$ CSI reports start occupying their respective CPUs on the same OFDM symbol on which $N_{CPU}$ - L CPUs are unoccupied, where each CSI report $n = 0, ..., N$ - 1 corresponds to $O_{CPU}^{(n)}$, the UE is not required to update the $N$ - $M$ requested CSI reports with lowest priority (according to Clause 5.2.5), where $0 \leq M \leq N$ is the largest value such that $\sum_{n=0}^{M-1} O_{CPU}^{(n)} \leq N_{CPU} - L$ holds.

A UE is not expected to be configured with an aperiodic CSI trigger state containing more than $N_{CPU}$ Reporting Settings. Processing of a CSI report occupies a number of CPUs for a number of symbols as follows:

$O_{CPU}$ = 0 for a CSI report with CSI-ReportConfig with higher layer parameter *reportQuantity* set to 'none' and *CSI-RS-ResourceSet* with higher layer parameter *trs-Info* configured

$O_{CPU}$ = 1 for a CSI report with *CSI-ReportConfig* with higher layer parameter *reportQuantity* set to 'cri-RSRP', 'ssb-Index-RSRP', 'cri-SINR', 'ssb-Index-SINR', 'cri-RSRP-Capability[Set]Index', 'ssb-Index-RSRP-Capability[Set]Index', 'cri-SINR-Capability[Set]Index', 'ssb-Index-SINR-Capability[Set]Index ' or 'none' (and *CSI-RS-ResourceSet* with higher layer parameter *trs-Info* not configured)

for a CSI report with *CSI-ReportConfig* with higher layer parameter *reportQuantity* set to 'cri-RI-PMI-CQI', 'cri-RI-i1", 'cri-RI-i1-CQI', 'cri-RI-CQI', or 'cri-RI-LI-PMI-CQI',

if max { $\mu_{PDCCII}$, $\mu_{CSI-RS}$, $\mu_{UL}$} $\leq$ 3, and if a CSI report is aperiodically triggered without transmitting a PUSCH with either transport block or HARQ-ACK or both when $L$ = 0 CPUs are occupied, where the CSI corresponds to a single CSI with wideband frequency-granularity and to at most 4 CSI-RS ports in a single resource without CRI report and where *codebookType* is set to 'typel-SinglePanel' or where *reportQuantity* is set to 'cri-RI-CQI', $O_{CPU}$ = $N_{CPU}$, [If a *CSI-ReportConfig* is configured with *codebookType* set to 'typel-SinglePanel' and the corresponding CSI-RS Resource Set for channel measurement is configured with two Resource Groups and N Resource Pairs, $O_{CPU}$ = 2$N$ + $M$, where $M$ is defined in clause 5.2.1.4.2.]

otherwise, $O_{cgg}$ = $K_s$, where $K_s$ is the number of CSI-RS resources in the CSI-RS resource set for channel measurement. For a CSI report with *CSI-ReportConfig* with higher layer parameter *reportQuantity* not set to 'none', the CPU(s) are occupied for a number of OFDM symbols as follows:

---

A periodic or semi-persistent CSI report (excluding an initial semi-persistent CSI report on PUSCH after the PDCCH triggering the report) occupies CPU(s) from the first symbol of the earliest one of each CSI-RS/CSI-IM/SSB resource for channel or interference measurement, respective latest CSI-RS/CSI-IM/SSB occasion no later than the corresponding CSI reference resource, until the last symbol of the configured PUSCH/PUCCH carrying the report.

An aperiodic CSI report occupies CPU(s) from the first symbol after the PDCCH triggering the CSI report until the last symbol of the scheduled PUSCH carrying the report. When the PDCCH reception includes two PDCCH candidates from two respective search space sets, as described in clause 10.1 of [6, TS 38.213], for the purpose of determining the CPU occupation duration, the PDCCH candidate that ends later in time is used.

An initial semi-persistent CSI report on PUSCH after the PDCCH trigger occupies CPU(s) from the first symbol after the PDCCH until the last symbol of the scheduled PUSCH carrying the report. When the PDCCH reception includes two PDCCH candidates from two respective search space sets, as described in clause 10.1 of [6, TS 38.213], for the purpose of determining the CPU occupation duration, the PDCCH candidate that ends later in time is used.

For a CSI report with *CSI-ReportConfig* with higher layer parameter *reportQuantity* set to 'none' and *CSI-RS-ResourceSet* with higher layer parameter *trs-Info* not configured, the CPU(s) are occupied for a number of OFDM symbols as follows:

A semi-persistent CSI report (excluding an initial semi-persistent CSI report on PUSCH after the PDCCH triggering the report) occupies CPU(s) from the first symbol of the earliest one of each transmission occasion of periodic or semi-persistent CSI-RS/SSB resource for channel measurement for L1-RSRP computation, until $Z_3'$ symbols after the last symbol of the latest one of the CSI-RS/SSB resource for channel measurement for L1-RSRP computation in each transmission occasion.

An aperiodic CSI report occupies CPU(s) from the first symbol after the PDCCH triggering the CSI report until the last symbol between $Z_3$ symbols after the first symbol after the PDCCH triggering the CSI report and $Z_3'$ symbols after the last symbol of the latest one of each CSI-RS/SSB resource for channel measurement for L1-RSRP computation. where ($Z_3$, $Z_3'$) are defined in the table 5.4-2.

In any slot, the UE is not expected to have more active CSI-RS ports or active CSI-RS resources in active BWPs than reported as capability. NZP CSI-RS resource is active in a duration of time defined as follows. For aperiodic CSI-RS, starting from the end of the PDCCH containing the request and ending at the end of the scheduled PUSCH containing the report associated with this aperiodic CSI-RS. When the PDCCH candidates are associated with a search space set configured with *searchSpaceLinking*, for the purpose of determining the NZP CSI-RS resource active duration, the PDCCH candidate that ends later in time among the two linked PDCCH candidates is used. For semi-persistent CSI-RS, starting from the end of when the activation command is applied, and ending at the end of when the deactivation command is applied. For periodic CSI-RS, starting when the periodic CSI-RS is configured by higher layer signalling, and ending when the periodic CSI-RS configuration is released. If a CSI-

RS resource is referred *N* times by one or more CSI Reporting Settings, the CSI-RS resource and the CSI-RS ports within the CSI-RS resource are counted *N* times. For a CSI-RS Resource Set for channel measurement configured with two Resource Groups and *N* Resource Pairs, if a CSI-RS resource is referred *X* times by one of the *M* CSI-RS resources, where *M* is defined in clause 5.2.1.4.2, and/or one or two Resource Pairs, the CSI-RS resource and the CSI-RS ports within the CSI-RS resource are counted X times.

### Proposal 1

In the case of AI/ML-based CSI reporting, when the UE performs CSI generation through the inference operation of an AI/ML model, the CPU occupation is assumed to be X, where the value of X is a value configured by the BS to the UE or a predefined value.

AI/ML-based CSI reporting may be broadly classified into two types: two-sided AI/ML and one-sided AI/ML. In both cases, it may be assumed that the BS (or network AI/ML server) performs training/inference and signals a trained AI/ML model to the UE, and the UE operates only based on AI/ML inference. The BS (or network AI/ML server), which is the entity responsible for training, may configure/indicate the corresponding value based on the computational complexity of inference, which is based on a floating point operation (FLOP) required for AI/ML inference, and/or reporting of UE capabilities related to CSI processing/memory. When the value, X is indicated, the UE calculates AI/ML-based CSI by assuming the CPU occupation configured/indicated by the BS as X (e.g., O CPU = X) and following the CPU occupation operation for the UE, which is specified in Table 6 extracted from TS 38.214.

In the case of AI/ML inference, without the burden of training, the multiplication of variables between nodes and the activation functions (e.g., sigmoid, Rectified Linear Unit (ReLU), hyperbolic tangent (tanh), etc.) for each node in a pretrained model are processed. Therefore, the inference operation has much lower complexity compared to training. However, for performance improvement, deeper and larger models are considered. In such cases, it is evident that the computational complexity increases due to an increase in the number of variables. Therefore, in an AI/ML model, the CPU occupation may vary depending on the amount of computation associated with AI/ML model parameters such as the number of variables, the number of nodes, the number of hidden layers, etc. and/or the amount of computation involved in pre-processing/post-processing of input/output data. Furthermore, AI/ML models are scalable, and depending on use cases, different AI/ML models may be configured. To reflect the diversity of the AI/ML models evenly, the following is proposed.

### Proposal 1-1

The UE may report information regarding an AI/ML model that may be handled with one CPU occupation to the BS (as a UE capability).

The information regarding the AI/ML model that may be handled with one CPU occupation in Proposal 1-1 may include some or all of the following: the number of variables, the number of nodes, and the number of hidden layers.

Alternatively, a value based on a specific computational unit (e.g., FLOP) that may be processed with one CPU occupation may be reported.

As another example, the BS may indicate/configure to the UE a threshold that may be handled with one CPU occupation. Since the value may vary depending on the performance of the UE, a relatively loose value may be indicated. Based on the UE capability, thresholds may be divided into multiple groups (e.g., high, middle, low, etc.), and a specific threshold may be indicated for each of the groups. Alternatively, the BS may configure or predefine a CPU required for CSI reporting based on a specific AI/ML model and then indicate/configure the CPU for each group to the UE. For example, the value X in Proposal 1 may be configured or predefined as shown in Table 1. The UE capability related to AI/ML may be reported by the UE.

Table 7 shows an example of configuring the values of X based on UE capabilities.

[Table 7]

| Group id | X |
|---|---|
| 1 - High capable UE | 1 |
| 2 - Middle capable UE | 2 |
| 3 - low capable UE | 3 |

Alternatively, if specific AI/ML models or versions of the models are specified, the UE may report the capability thereof for each model/version.

Proposal 1-2

In addition to the CPU, an AI/ML processing unit (APU) may be introduced to allow the UE to effectively manage processing of multiple AI/ML models.

In Proposal 1-2, the APU may allow to report the number of AI/ML modules/functions (A) that the UE may simultaneously calculate per CC or across CCs. If B APUs are occupied, the UE may assume that the UE has A-B unoccupied APUs. In such a situation, if the number of AI/ML models activated or triggered exceeds A-B, the selected A-B AI/ML models may be activated according to a predetermined priority rule, and the UE may report information regarding AI/ML models that are not selected to the BS. It may be assumed that the APU is occupied from a time of receiving signaling (e.g., MAC-CE/DCI) for triggering/activating a specific AI/ML model until a time of receiving deactivation, termination, or switching signaling.

Alternatively, the APU may be managed/applied integrally over AI/ML models, and the number of APUs required for each AI/ML model may vary.

As another example, the APU may be considered to be separately configured and indicated for AI/ML-based CSI reporting, and thus, the UE may report both the maximum supported APU and CPU values as a capability. In this case, the occupation rule for the APU is the same as that for the CPU, but the occupation rule for the APU is used specifically for managing AI/ML-based CSI reporting. The statement that the APU occupation rule is the same as that for the CPU means that, as in the legacy system, one CSI report associated with one CSI-RS resource is assumed to occupy K APUs (e.g., K=1). Alternatively, since the APU may be used across multiple CSI resources as in the case of the CSI prediction of the UE, the K value may have a value of 0.5. In this case, it may be assumed that one CSI report associated with two resources occupies one APU.

The primary use case of the APU may be for AI/ML inference. However, if the UE has the training capability, separate units for managing training and inference may be introduced. For example, the APU may be managed separately as APU-training and APU-inference. In this case, if all of the APU-inference of the UE is occupied and some or all of the APU-training is unoccupied, the APU-training may be borrowed and used according to a specific rule. Conversely, if all of the APU-training of the UE is occupied and some or all of the APU-inference is unoccupied, the APU-inference may be borrowed and used according to a specific rule. The specific rule refers to a rule for exchanging the usage of APU-training and APU-inference. For example, each APU occupation may be described by a function (e.g., linear equations or polynomial equations). The following linear equation may be used: w * APU-inference + b = APU-training, where w is a coefficient used to match the capabilities of APU-training and APU-inference, and b is an offset. For example, if w=2 and b=0, it means that APUs required for processing of APU-training are twice that of APU-inference.

Meanwhile, when APU-training and APU-inference are integrated and operated/applied with a single APU, if there is APU shortage, training may take priority over inference and occupies the APU (or inference may return the APU that the inference already occupies for use by training) (the reverse operation may also be possible). If inference is not allowed due to APU shortage, a default mode may be configured. For example, in the case of CSI reporting, it may fall back to Type I CSI reporting as the default mode. Alternatively, if inference is not allowed due to APU shortage, the AI/ML model inference may be dropped or delayed to apply the inference. Here, "delay" means waiting until an unoccupied APU equal to or larger than the APU occupied by the AI/ML model is available. However, if the delay is too long, issues such as buffer size, memory size, etc. may arise. Therefore, a maximum window size or timer may be introduced to limit the delay. Waiting may be performed until the window or timer expires. If an unoccupied APU is secured before expiration, the AI/ML inference may be applied. Otherwise, the AI/ML inference may be dropped. The information regarding the drop or delay of the AI/ML model may be reported to the BS or AI/ML server.

Proposal 1-3

If the current APU occupation value of the UE is 0 (i.e., L=0) and the BS triggers training/updating/inference of an AI/ML model, for faster training/updating/inference of the AI/ML model, it is assumed that the UE occupies as many APUs as the UE is capable of handling simultaneously per CC or across CCs ($N_{APU}$: The UE indicates the number of supported simultaneous AI/ML model training/update/inference $N_{APU}$). In other words, for fast training/updating/inference of a specific AI/ML model, the APU occupation is $O_{APU} = N_{APU}$.

In Proposal 1-3, the BS may configure/instruct to the UE to occupy all the necessary APUs for fast training/updating/inference. Alternatively, if there is a priority for a specific AI/ML model, it may be agreed that Proposal 1-3 is applied only when training/updating/inference of an AI/ML model with the highest priority is triggered.

## Proposal 2

When an AI/ML function is modularized and multiple AI/ML models (e.g., Y) participate in a single CSI report, the CPU occupation is considered to be Y or Y+1.

Generally, CSI reporting is performed by measuring raw channel data through channel measurement (CMR) and/or interference measurements (IMR) based on a specific RS (e.g., CSI-RS or SSB) configured by the BS. The data is then preprocessed (e.g., eigenvalue decomposition) as needed, and based on pre-processing, a preferred CRI/RI/CQI/PMI or SSBRI/CRI/L1-RSRP/L1-SINR is calculated. The entire process may be handled with a single AI/ML model. Alternatively, the process may be divided into multiple modules, and modules/functions with higher computational complexity or modules/functions that may be replaced with lower-complexity modules/functions providing moderate performance may be replaced by AI/ML models. Therefore, the number (Y) of modules participating in modularized AI/ML-based CSI reporting is considered as the CPU occupation. If the modules are mixed with other legacy modules/functions, an additional count of 1 may be added, and it is considered as Y+1. Even if a specific module (e.g., channel estimation) is implemented in the UE, the UE may report information (e.g., the number of modules or model information) to the BS, which supports the scheduling flexibility of the BS.

## Proposal 3

If the current CPU occupation value of the UE is 0 (i.e., L=0) and the BS triggers AI/ML-based CSI reporting, for faster AI/ML-based CSI reporting, it is assumed that the UE occupies as many CPUs as the UE is capable of handling simultaneously per CC or across CCs ($N_{CPU}$: The UE indicates the number of supported simultaneous CSI calculations $N_{CPU}$ with parameter *simultaneousCSI-ReportsPerCC* in a component carrier, and *simultaneousCSI-ReportsAllCC* across all component carriers). In other words, for AI/ML-based CSI reporting, the CPU occupation is $O_{CPU}=N_{CPU}$.

In the case of the AI/ML-based CSI calculation, if the size of an AI/ML model where inference is performed is not significant, the amount of computational may be low, thereby allowing for faster CSI reporting. Especially, in a two-sided model where both the BS and UE perform inference using AI/ML models, the UE may occupy all available CPUs to perform fast AI/ML-based CSI reporting as described in Proposal 3.

As another example, in Proposal 3, the value of $N_{CPU}$ may be configured and managed separately for AI/ML-based CSI reporting and legacy CSI reporting. For instance, $N_{CPU\_AI}$ may be introduced separately, and $N_{CPU\_AI}$ may be used exclusively for AI/ML-based CSI reporting. Alternatively, if a specific number of AI/ML-based CSI reports are triggered (e.g., more than one report), $N_{CPU}$ may be replaced with $N_{CPU\_AI}$. Here, $N_{CPU\_AI}$ may be a value determined based on the UE capability report. Alternatively, the BS may define multiple values for $N_{CPU}$ and indicate to the UE a value to be used. This is used to allow the BS to configure/indicate a specific $N_{CPU}$ value depending on the CSI report scheduled by the BS, thereby increasing the flexibility for both the BS and UE. Alternatively, multiple values of $N_{CPU\_AI}$ may be configured to the UE and applied specifically for different AI/ML model groups (AI/ML model (group)-specifically). For example, if two values: $N_{CPU\_AI-1}$ and $N_{CPU\_AI-2}$ are applied and there are multiple AI/ML models, the multiple AI/ML models may be mapped to each of $N_{CPU\_AI-1}$ and $N_{CPU\_AI-2}$ for use. In other words, for AI/ML models belonging to group 1, the CPU occupation is managed separately with $N_{CPU\_AI-1}$ as the upper limit, while for AI/ML models in group 2, the CPU occupation is managed separately with $N_{CPU\_AI-2}$ as the upper limit. Information regarding such grouping may be based on the UE capability report or configured/indicated by the BS.

**Proposal 4**

To enhance scheduling flexibility, the BS may adjust the CSI priority for AI/ML-based CSI reporting by additionally signaling a CSI priority indicator.

As described in Table 8 below, when multiple CSI reports collide on time and/or frequency resources, or when multiple PUCCHs and/or PUSCHs carrying CSI are multiplexed, a specific CSI report may be dropped based on the following priority rule. Regarding the CSI priority rule, a CSI report with a lower value of $\text{Pri}_{iCSI\,(y,k,c,s)}$ has a higher priority according to the rules in Table 8 extracted from the standard document. To adjust the priority for AI/ML-based CSI reporting based on this structure, the BS may add a 1-bit field to DCI that schedules the CSI reporting and indicate whether the priority is high or low. For example, the priority adjustment may be performed as follows: by setting k to 0 or 1 in Equation 2 below, a higher or equal priority may be indicated compared to existing normal CSI reports (e.g., Type 1 CSI, Type 2 CSI, etc.). As another example, the range of k values in Equation 2 may be extended to 0, 1, and 2, thereby allowing for more flexibility in the priority. In this case, the field size for the priority may increase to 2 bits. The indications in Proposal 4 may be specified differently for each AI/ML model.

[Equation 2]

$$\text{Pri}_{iCSI\,(y,k,c,s)} = 3 \cdot N_{cells} * M_s * y + N_{cells} * M_s * k + M_s * c + s$$

Alternatively, AI/ML-based CSI reporting may be configured to have the same priority as beam reporting by setting k=0 for the AI/ML-based CSI reporting.

[Table 8]

| |
|---|
| 5.2.5 Priority rules for CSI reports |
| CSI reports are associated with a priority value $\text{Pri}_{iCSI}(y, k, c, s) = 2 \cdot N_{cells} \cdot M_s \cdot y + N_{cells} \cdot M_s \cdot k + M_s \cdot c + s$ where $y = 0$ for aperiodic CSI reports to be carried on PUSCH $y = 1$ for semi-persistent CSI reports to be carried on PUSCH, $y = 2$ for semi-persistent CSI reports to be carried on PUCCH and $y = 3$ for periodic CSI reports to be carried on PUCCH; |
| $k = 0$ for CSI reports carrying L1-RSRP or L1-SINR and $k = 1$ for CSI reports not carrying L1-RSRP or L1-SINR; |
| $c$ is the serving cell index and $N_{cells}$ is the value of the higher layer parameter *maxNrofServingCells;* |
| $s$ is the *reportConfigID* and $M_s$ is the value of the higher layer parameter *maxNrofCSI-ReportConfigurations.* |
| A first CSI report is said to have priority over second CSI report if the associated $\text{Pri}_{iCSI}(y, k, c, s)$ value is lower for the first report than for the second report. |
| Two CSI reports are said to collide if the time occupancy of the physical channels scheduled to carry the CSI reports overlap in at least one OFDM symbol and are transmitted on the same carrier. When a UE is configured to transmit two colliding CSI reports, |
| if $y$ values are different between the two CSI reports, the following rules apply except for the case when one of the $y$ value is 2 and the other y value is 3 (for CSI reports transmitted on PUSCH, as described in Clause 5.2.3; for CSI reports transmitted on PUCCH, as described in Clause 5.2.4): |
| The CSI report with higher $\text{Pri}_{iCSI}(y, k, c, s)$ value shall not be sent by the UE. |
| otherwise, the two CSI reports are multiplexed or either is dropped based on the priority values, as described in Clause 9.2.5.2 in [6, TS 38.213]. |
| If a semi-persistent CSI report to be carried on PUSCH overlaps in time with PUSCH data transmission in one or more symbols on the same carrier, and if the earliest symbol of these PUSCH channels starts no earlier than $N_2$ $+d_{2,1}$ symbols after the last symbol of the DCI scheduling the PUSCH where $d_{2,1}$ is the maximum of the $d_{2,1}$ associated with the PUSCH carrying semi-persistent CSI report and the PUSCH with data transmission, the CSI report shall not be transmitted by the UE. Otherwise, if the timeline requirement is not satisfied this is an error case. |
| If a UE would transmit a first PUSCH that includes semi-persistent CSI reports and a second PUSCH that includes an UL-SCH on the same carrier, and the first PUSCH transmission would overlap in time with the second PUSCH transmission, the UE does not transmit the first PUSCH and transmits the second PUSCH. The UE expects that the first and second PUSCH transmissions satisfy the above timing conditions for PUSCH transmissions that overlap in time when at least one of the first or second PUSCH transmissions is in response to a DCI format detection by the UE. |

**Proposal 5**

To support fast CSI reporting in AI/ML model inference-based CSI reporting of the UE, values smaller than previously defined CSI calculation latency (e.g., Z, Z', or CSI reference resource timing) may be defined/configured.

Proposal 5 is intended to support cases where model training is completed, and the UE needs to perform fast CSI reporting based on AI/ML model inference. As proposed below, values smaller than those in Table 5.4-1 or Table 5.4-2 of TS 38.214, as shown in Table 9 below, may be defined and used for AI/ML-based CSI reporting. Alternatively, the Z/Z' values from Table 5.4-1 may be used for AI/ML-based CSI reporting. Proposal 5 may be further extended by defining and using specific Z/Z' values depending on AI/ML models or model groups. The model group refers to a group of AI/ML models where CSI calculation may be performed within a specific range of Z/Z' values. If the UE reports information related to the corresponding Z/Z' values as a capability, the BS may configure which Z/Z' value to be used based on the information.

**[277]**  [Table 9]

| 5.4 UE CSI computation time |
| --- |
| When the *CSI request* field on a DCI triggers a CSI report(s) on PUSCH, the UE shall provide a valid CSI report for the $n$-th triggered report, |
| if the first uplink symbol to carry the corresponding CSI report(s) including the effect of the timing advance, starts no earlier than at symbol $Z_{ref}$, and |
| if the first uplink symbol to carry the $n$-th CSI report including the effect of the timing advance, starts no earlier than at symbol $Z'_{ref}(n)$, |
| where $Z_{ref}$ is defined as the next uplink symbol with its CP starting $T_{proc,CSI} = (Z)(2048 + 144) \cdot \kappa 2^{-\mu} \cdot T_C + T_{switch}$ after the end of the last symbol of the PDCCH triggering the CSI report(s), and where $Z'_{ref}(n)$, is defined as the next uplink symbol with its CP starting $T'_{proc,CSI} = (Z')(2048 + 144) \cdot \kappa 2^{-\mu} \cdot T_C$ after the end of the last symbol in time of the latest of: aperiodic CSI-RS resource for channel measurements, aperiodic CSI-IM used for interference measurements, and aperiodic NZP CSI-RS for interference measurement, when aperiodic CSI-RS is used for channel measurement for the $n$-th triggered CSI report, and where $T_{switch}$ is defined in clause 6.4 and is applied only if $Z_1$ of table 5.4-1 is applied. |

If the PUSCH indicated by the DCI is overlapping with another PUCCH or PUSCH, then the CSI report(s) are multiplexed following the procedure in clause 9.2.5 of [6, TS 38.213] and clause 5.2.5 when applicable, otherwise the CSI report(s) are transmitted on the PUSCH indicated by the DCI.

When the *CSI request* field on a DCI triggers a CSI report(s) on PUSCH, if the first uplink symbol to carry the corresponding CSI report(s) including the effect of the timing advance, starts earlier than at symbol $Z_{ref}$,

the UE may ignore the scheduling DCI if no HARQ-ACK or transport block is multiplexed on the PUSCH.

When the *CSI request* field on a DCI triggers a CSI report(s) on PUSCH, if the first uplink symbol to carry the $n$-th CSI report including the effect of the timing advance, starts earlier than at symbol $Z'_{ref}(n)$,

the UE may ignore the scheduling DCI if the number of triggered reports is one and no HARQ-ACK or transport block is multiplexed on the PUSCH

Otherwise, the UE is not required to update the CSI for the $n$-th triggered CSI report.

When the PDCCH reception includes two PDCCH candidates from two respective search space sets, as described in clause 10.1 of [6, TS 38.213], for the purpose of determining the last symbol of the PDCCH triggering the CSI report(s), the PDCCH candidate that ends later in time is used.

$Z$, $Z'$ and $\mu$ are defined as:

---

$Z = \max_{m=0,\dots,M-1}(Z(m))$ and $Z' = \max_{m=0,\dots,M-1}(Z'(m))$, where $M$ is the number of updated CSI report(s) according to Clause 5.2.1.6, $(Z(m), Z'(m))$ corresponds to the $m$-th updated CSI report and is defined as

$(Z_1, Z'_1)$ of the table 5.4-1 if max$\{ \mu_{PDCCH}, \mu_{CSI-RS}, \mu_{UL}\} \leq 3$ and if the CSI is triggered without a PUSCH with either transport block or HARQ-ACK or both when $L = 0$ CPUs are occupied (according to Clause 5.2.1.6) and the CSI to be transmitted is a single CSI and corresponds to wideband frequency-granularity where the CSI corresponds to at most 4 CSI-RS ports in a single resource without CRI report and where *CodebookType* is set to 'typeI-SinglePanel' or where *reportQuantity* is set to 'cri-RI-CQI', or

$(Z_1, Z'_1)$ of the table 5.4-2 if the CSI to be transmitted corresponds to wideband frequency-granularity where the CSI corresponds to at most 4 CSI-RS ports in a single resource without CRI report and where *CodebookType* is set to 'typeI-SinglePanel' or where *reportQuantity* is set to 'cri-RI-CQI', or

$(Z_1, Z'_1)$ of the table 5.4-2 if the CSI to be transmitted corresponds to wideband frequency-granularity where the *reportQuantity* is set to 'ssb-Index-SINR', 'cri-SINR', 'ssb-Index-SINR-Capability[Set]Index ', or 'cri-SINR-Capability[Set]Index ', or

$(Z_3, Z'_3)$ of the table 5.4-2 if *reportQuantity* is set to 'cri-RSRP', 'ssb-Index-RSRP', 'cri-RSRP-Capability[Set]Index' or 'ssb-Index-RSRP-Capability[Set]Index ', where $X\mu$ is according to UE reported capability *beamReportTiming* and $KB_l$ is according to UE reported capability *beamSwitchTiming* as defined in [13, TS 38.306], or

$(Z_2, Z'_2)$ of table 5.4-2 otherwise.

$\mu$ of table 5.4-1 and table 5.4-2 corresponds to the min $(\mu_{PDCCH}, \mu_{CSI-RS}, \mu_{UL})$ where the $\mu_{PDCCH}$ corresponds to the subcarrier spacing of the PDCCH with which the DCI was transmitted and $\mu_{UL}$ corresponds to the subcarrier spacing of the PUSCH with which the CSI report is to be transmitted and $\mu_{CSI-RS}$ corresponds to the minimum subcarrier spacing of the aperiodic CSI-RS triggered by the DCI

**Table 5.4-1: CSI computation delay requirement 1**

| $\mu$ | $Z_1$ [symbols] | |
|---|---|---|
| | $Z_1$ | $Z'_1$ |
| 0 | 10 | 8 |
| 1 | 13 | 11 |
| 2 | 25 | 21 |
| 3 | 43 | 36 |

**Table 5.4-2: CSI computation delay requirement 2**

| $\mu$ | $Z_1$ [symbols] | | $Z_2$ [symbols] | | $Z_3$ [symbols] | |
|---|---|---|---|---|---|---|
| | $Z_1$ | $Z'_1$ | $Z_2$ | $Z'_2$ | $Z_3$ | $Z'_3$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | $\min(44, X_2 + KB_1)$ | $X_2$ |
| 3 | 97 | 85 | 152 | 140 | $\min(97, X_3 + KB_2)$ | $X_3$ |

| | | | | | | |
|---|---|---|---|---|---|---|
| 5 | 388 | 340 | 608 | 560 | $\min(388, X5 + KB3)$ | $X5$ |
| 6 | 776 | 680 | 1216 | 1120 | $\min(776, X6 + KB4)$ | $X6$ |

As described above, when a network or BS with the AI technology applied or a network/BS with advanced performance (achieved through other means) is implemented, it is expected that integrated control and/or real-time cooperation between BSs will enable dynamic optimization for interference and traffic. The present disclosure proposes resource control and CSI-related signaling methods suitable for the above purpose. While the present disclosure is described based on the 3GPP NR system within the current system architecture, it is evident that the disclosure is also applicable to other communication systems.

## [APU occupation for inactive AI/ML model(s)]

When an AI/ML model processing unit (APU) is introduced to effectively manage an AI/ML model, the present disclosure proposes an occupation rule for effective management of the APU. In particular, the present disclosure proposes an APU management method for inactive AI/ML model(s)/functionality(ies) during model monitoring that aims at fast activation, switching, or update of an inactive model. An inactive AI/ML model may refer to a model that is not currently in an active state (e.g., a model that has received an activation command or is currently performing an AI/ML inference/monitoring/training operation) among one or more AI/ML models that are registered, deployed, or implemented in the UE (or the network).

## Proposal 6

Information on whether monitoring is performed per model, per model group, or per AI/ML functionality in an inactive mode may be signaled based on at least some of the following embodiments.

1) Information on whether monitoring is possible in inactive AI/ML model(s) may be reported through capability reporting of the UE. For example, the information may be reported per AI/ML model, per AI/ML model group, or per AI/ML functionality. The following is an example in which a capability is reported per AI/ML model.

- AI/ML Model #1 - capable on monitoring at inactive model state
- AI/ML Model #2 - capable on monitoring at inactive model state

- AI/ML Model #3 - incapable on monitoring at inactive model state

2) As another embodiment, based on capability reporting of the UE, the BS may indicate AI/ML models, AI/ML model groups, or AI/ML functionalities for which monitoring is to be performed even when the model state is inactive, through higher layer signaling (e.g., RRC, MAC-CE, DCI, or a combination of the signaling). Alternatively, active/inactive/idle states may be defined for an AI/ML model as shown below, and monitoring may be indicated based on the states.

i) AI/ML model/functionality active state: a state in which an AI/ML model/functionality activation command has been received or an operation such as AI/ML inference, monitoring, or training is currently performed
ii) AI/ML model/functionality inactive state: a state in which an AI/ML model/functionality activation command has not been received or an operation such as AI/ML model inference, monitoring, or training is not being performed, but reporting of monitoring information is allowed (based on an indication or configuration of the BS).
iii) AI/ML model/functionality idle state: a state in which an AI/ML model/functionality activation command has not been received and an operation such as AI/ML inference, monitoring, or training is not being performed, and reporting of monitoring information is not allowed (based on an indication or configuration of the BS).

As described above, AI/ML model monitoring may be performed even in an AI/ML model inactive state. In this case, the inactive AI/ML model needs to occupy an APU. A priority for APU occupancy of an AI/ML model/model group/functionality may correspond to the order of i) AI/ML model/functionality active state > ii) AI/ML model/functionality inactive state > iii) AI/ML model/functionality idle state. In each state, a priority may be determined per model according to a specific rule (e.g., a trigger order, an order of lowest/highest model ID, or a most recent inference/monitoring order).
In this case, a duration for occupying the APU may be ambiguous, and Proposal 7 below addresses an APU occupancy duration.

## Proposal 7

An APU occupancy duration of inactive AI/ML model(s), model group(s), or functionality(ies) may be controlled according to the following two approaches.

i) Approach 1: When the BS commands/controls monitoring or assessment for (specific) inactive AI/ML model(s), model group(s), or functionality(ies), the APU may be occupied from a time point at which the BS commands the UE to start model monitoring/assessment to a time point at which the UE reports the corresponding result.
ii) Approach 2: When the UE determines to perform monitoring or assessment for (specific) inactive AI/ML model(s), model group(s), or functionality(ies), the UE may perform monitoring or assessment for the inactive model on a best-effort basis by using an idle APU.

In the case of Approach 1, the BS commands or controls model monitoring or assessment for inactive AI/ML model(s), model group(s), or functionality(ies). In this case, for the inactive model, model group, or AI/ML functionality, the UE performs monitoring or assessment for the corresponding model from a time point n (or n+X) at which the UE receives a command instructing the UE to perform monitoring or assessment (e.g., a command via MAC-CE or DCI) from the BS, and the UE may occupy the APU until a time point m at which a report value is reported to the BS (or a time point at which a response from the BS to the report is received, or n+Y). The above time points may be at a slot level or a symbol level, and values X and Y may be based on UE capability (e.g., UE processing time), may be configured by the BS, or may be predetermined.
Alternatively, the UE may perform only monitoring or assessment for the model(s) without reporting the corresponding result, or may collect multiple results and report the results to the BS at once. In such a case, a specified time such as a specific timer or a monitoring duration may be defined. For example, it may be defined/configured that the APU occupancy lasts from a time point n (or n+X) at which a command related to AI/ML monitoring or assessment is received to a time point at which a timer expires, or for a predetermined/configured duration Z.
In the case of Approach 2, the UE determines to perform model monitoring or assessment for inactive AI/ML model(s), model group(s), or functionality(ies). In this case, for model monitoring or assessment of the inactive model, model group, or AI/ML functionality, the UE utilizes an idle APU among all APUs based on UE capability and performs AI/ML model monitoring or assessment on a best-effort basis. If the BS triggers a (new or additional) AI/ML-based operation for the UE during model monitoring or assessment for the inactive model, model group, or AI/ML functionality, the UE may need to stop, hold, or suspend the ongoing model monitoring or assessment for the inactive AI/ML model(s), model group(s), or functionality(ies) and give priority to processing the AI/ML-based operation triggered by the BS. In this case, the idle APU of the UE is occupied by the (active) AI/ML model, model group, or functionality triggered (newly or additionally) by the BS. In this case as well, an active AI/ML model occupies the APU with a higher priority than an inactive AI/ML model. As another embodiment, when the BS triggers an AI/ML-based operation while the UE is performing monitoring or assessment of inactive AI/ML model(s), model group(s), or functionality(ies) based on an idle APU, the UE may determine to ignore the BS trigger and report that the trigger is ignored. Alternatively, the UE may delay applying the trigger instead of applying the trigger immediately, and may report information on the delay to the BS. Such an operation may be useful, for example, when the BS triggers a (new or additional) AI/ML-based operation at a time when an APU occupancy time for monitoring or assessment of inactive AI/ML model(s), model group(s), or functionality(ies) is nearly finished. In this case, dropping processing already performed for the monitoring or assessment of the inactive model(s) may be inefficient, and therefore the UE may ignore the trigger and complete the ongoing operation.

In Approach 2, when the UE reports, periodically, semi-periodically, or aperiodically, monitoring or assessment result information for inactive AI/ML model(s), model group(s), or functionality(ies) to the BS, monitoring or assessment may be impossible for some or all models due to insufficient idle APUs. To address this, when reporting monitoring or assessment results for inactive AI/ML model(s), model group(s), or functionality(ies), the UE may separately report inactive AI/ML model(s), model group(s), or functionality(ies) for which monitoring or assessment is performed and inactive AI/ML model(s), model group(s), or functionality(ies) for which monitoring or assessment is not performed. When monitoring or assessment is not performed, the UE may additionally report a reason (e.g., insufficient APU). Alternatively, after completion of monitoring or assessment for inactive AI/ML model(s), model group(s), or functionality(ies), the UE may report the results at once through a MAC-CE.

For smooth operation of Approach 2, the UE may report information related to currently occupied APUs (e.g., the number of occupied APUs, a time point at which the APUs are occupied) to the BS. The reporting may include periodic, semi-periodic, aperiodic, and event-based reporting. For example, for event-based reporting, a specific threshold value for a monitoring result may be predefined or may be configured by the BS. Alternatively, instead of reporting information on occupied APUs, the UE may report information on the number of currently available APUs. In addition, when reporting occupied or unoccupied APUs, the UE may also report information on (expected) occupied or unoccupied APUs at each time point. For example, the UE may report {the number of remaining APUs at t1, the number of remaining APUs at t2, the number of remaining APUs at t3, ...} as a set. The time points t1, t2, t3, ... may be predefined or may be configured by the BS. Alternatively, the UE may additionally report information on the time points, such as a start time or duration (offset) value.

## Proposal 8

When performing monitoring or assessment for inactive AI/ML model(s), model group(s), or functionality(ies) as described in Proposals 6 and 7, if a plurality of candidate AI/ML models, model groups, or functionalities are subject to monitoring or assessment, it is necessary to determine a priority among the candidate AI/ML models, model groups, or functionalities.

A priority for monitoring or assessment of a plurality of inactive AI/ML models, model groups, or AI/ML functionalities may be determined based on at least one of the following three approaches.

    i) Approach 1: a priority determined by the UE
    ii) Approach 2: a priority determined by a network (NW) indication
    iii) Approach 3: a priority determined by a priority rule

In the case of Approach 1, the UE determines a priority and occupies APUs to perform monitoring. To inform the BS of which models the UE has decided to monitor, the UE may explicitly report model, model group, or functionality IDs to the BS, and such a report may be transmitted alone or together with additional information (e.g., monitoring results or the number of occupied/unoccupied APUs).

In the case of Approach 2, the NW may specify which AI/ML model(s), model group(s), or functionality(ies) are to be monitored. For example, the BS may semi-statically configure the AI/ML model(s), model group(s), or functionality(ies) through RRC signaling or may dynamically designate the AI/ML model(s), model group(s), or functionality(ies) through a MAC-CE or DCI. The information may be transmitted to the UE together with monitoring triggering information.

In the case of Approach 3, a priority of inactive AI/ML model(s), model group(s), or functionality(ies) may be determined based on a specific priority rule. For example, a priority may be assigned for each AI/ML use case. Mobility-related use cases and/or beam management (BM) use cases may occupy APUs with a higher priority than other use cases (e.g., CSI feedback or positioning). In addition, for the same use case, a priority rule may be defined according to model-specific requirements or performance of a specific AI/ML model, model group, or functionality. For example, in a CSI use case, if model #A provides higher accuracy (or a higher compression ratio) than model #B, a priority rule may be defined such that model #A is assigned a higher priority than model #B.

For example, a priority may be determined for inactive AI/ML model(s), model group(s), or functionality(ies) according to Approach 3. The UE may perform model monitoring or assessment by applying an APU occupancy rule according to the priority. Meanwhile, a predefined or configured priority may also be changed in real time or dynamically based on whether the UE has recently performed monitoring or assessment. For example, the UE may assign a higher priority to inactive AI/ML model(s), model group(s), or functionality(ies) that have not been recently monitored or assessed, thereby allowing the inactive models to be monitored or assessed in a fair manner. Although the above priority determination method is described for inactive model(s) or functionality(ies), the same method may also be applied to active model(s) or functionality(ies).

In addition, when a priority is determined according to Approach 3, ambiguity may arise regarding how the UE should operate if first inactive AI/ML model(s), model group(s), or functionality(ies) with a higher priority are triggered later than second inactive AI/ML model(s), model group(s), or functionality(ies) with a lower priority. If the second inactive AI/ML model(s), model group(s), or functionality(ies) have already occupied an APU, the UE may not drop monitoring or assessment of the second inactive AI/ML model(s), model group(s), or functionality(ies) even when the first inactive AI/ML model(s), model group(s), or functionality(ies) with a higher priority is triggered. In this case, the UE may delay monitoring or assessment for the newly triggered first inactive AI/ML model(s), model group(s), or functionality(ies) and perform monitoring or assessment once an APU becomes available. Alternatively, when the first inactive AI/ML model(s), model group(s), or functionality(ies) with a higher priority are triggered, the UE may drop the second inactive AI/ML model(s), model group(s), or functionality(ies) in an order of priority. Then, after securing an APU, the UE may perform monitoring or assessment for the first inactive AI/ML model(s), model group(s), or functionality(ies) with a higher priority.

**Proposal 9**

When inactive AI/ML model(s), model group(s), or functionality(ies) are managed with a common APU together with active AI/ML model(s), model group(s), or functionality(ies), APU occupancy for monitoring or assessment of the inactive AI/ML model(s), model group(s), or functionality(ies) may occupy fewer APUs than in the active case. For example, if one active AI/ML model or functionality occupies one APU, an inactive AI/ML model or functionality may occupy $\alpha$ APU ($\alpha \leq 1$), and the value of $\alpha$ may be determined based on UE capability, a configuration of the BS, or a predefined agreement.

This is because, for inactive AI/ML model(s), model group(s), or functionality(ies), a processing capability required for monitoring may be implemented or operated more simply than that of active model(s). Alternatively, instead of using a common APU for active and inactive AI/ML models or functionalities, the APU may be separately managed for each active or inactive AI/ML model or functionality. For example, the UE may manage APUs by distinguishing the APUs as APU-active and APU-inactive.

The APU occupancy methods proposed above may also be extended and applied to active models in addition to inactive models. For example, an APU occupancy time may be determined as follows. The UE may perform training, inference, or monitoring from a time point n (or n+X) at which the UE receives an activation command instructing training, inference, or monitoring of an AI/ML model, model group, or AI/ML functionality from the BS (via a MAC-CE or DCI). The UE may occupy the APU for the AI/ML model, model group, or AI/ML functionality until a time point m (or n+Y) at which a deactivation, switching, or update command for the model is subsequently received from the BS. In the case of model monitoring, the APU may be occupied until a time point m at which the UE transmits a corresponding report value to the BS (or a time point at which the UE receives a response from the BS for the report, or n+Y). The above time points may be at a slot level or a symbol level, and the values of X and Y may be based on UE capability (e.g., UE processing time), may be configured by the BS, or may be predetermined.

As described above, when a network or BS to which AI/ML technology is applied or a network or BS having enhanced performance (through other means) is implemented, dynamic optimization for interference or traffic may become possible through real-time cooperation and/or integrated control between BSs. The present disclosure proposes control and AI/ML-related signaling methods suitable for the above operation. Although the description is based on a 3GPP system for convenience, the embodiments are not limited thereto and may be applied to various other communication systems. In addition, Proposals 1 to 9 may be applied independently or in any combination.

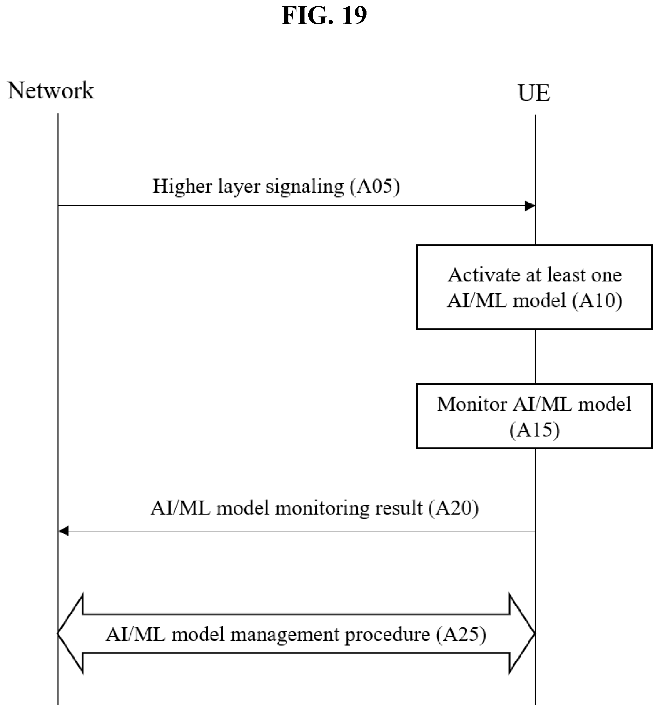

FIG. 19 is a diagram for explaining operations of a network and a UE in a wireless communication system according to an embodiment.

Referring to FIG. 19, the network may perform higher layer signaling to the UE at least once (A05). The higher layer signaling may include configurations for AI/ML models. The UE may configure the AI/ML models based on the higher layer signaling.

The UE may activate at least one of the configured AI/ML models (A10). For example, activation or deactivation of an AI/ML model may be performed based on a network indication such as MAC or DCI. For convenience of explanation, an AI/ML model in an inactive state is referred to as a first AI/ML model, and an AI/ML model in an active state is referred to as a second AI/ML model.

The UE may monitor at least one of the configured AI/ML models (A15).

The AI/ML model monitored by the UE may include the first AI/ML model. The first AI/ML model may be determined according to a network indication or may be autonomously determined by the UE.

The AI/ML model monitored by the UE may include the second AI/ML model.

Monitoring the first AI/ML model in the inactive state may occupy APU(s) for a shorter duration than monitoring the second AI/ML model in the active state or occupy fewer APU(s) than monitoring the second AI/ML model in the active state.

Monitoring the first AI/ML model may be performed based on a remaining APU that is not occupied by the second AI/ML model in the active state.

The second AI/ML model in the active state may occupy an APU with a higher priority than the first AI/ML model in the inactive state.

Monitoring the second AI/ML model in the active state may occupy one APU, and monitoring the first AI/ML model in the inactive state may occupy n APU(s), where n may be a real number greater than 0 and less than or equal to 1.

Here, n may be determined based on UE capability or may be provided through network signaling.

The UE may transmit a result of monitoring the AI/ML model to the network (A20).

Based on the result of monitoring the AI/ML model, the UE and the network may perform a lifecycle management (LCM) procedure for the AI/ML model (A25).

A start of a time duration during which the APU is occupied by monitoring the first AI/ML model may be determined based on a time point at which monitoring of the first AI/ML model is instructed.

An end of a duration during which the APU is occupied by monitoring the first AI/ML model may be determined based on at least one of: i) a time point at which a result of monitoring the first AI/ML model is reported (A20); ii) a time point at which a network response to the report (A20) is received; or iii) a time point at which a predetermined timer expires.

The UE may report information on an occupied state or an unoccupied state of the APU to the network.

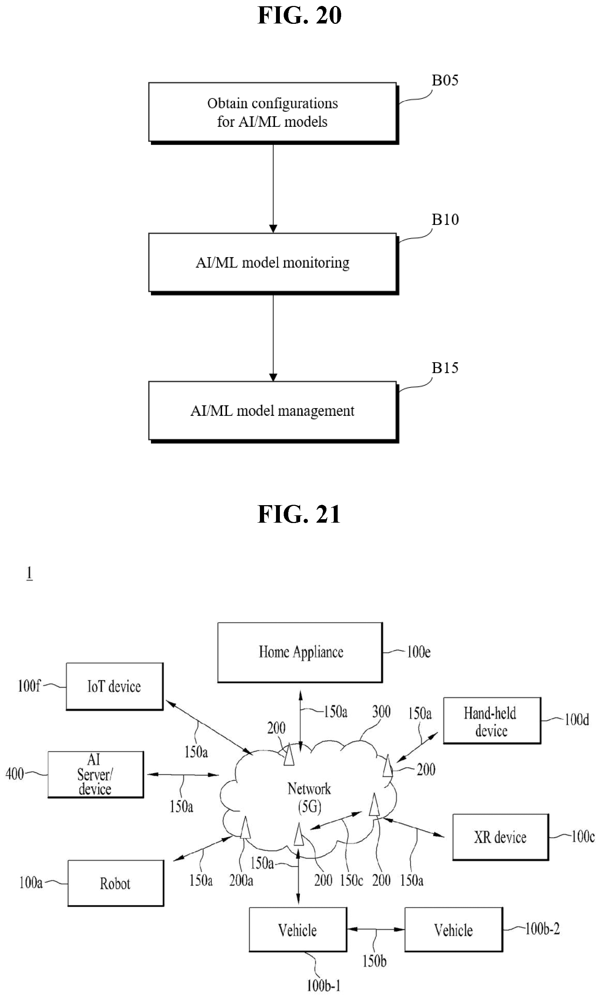

FIG. 20 illustrates a flow of a method performed by a UE according to an embodiment.

Referring to FIG. 20, the UE may obtain configurations for AI/ML models based on higher layer signaling (B05).

The UE may monitor at least one of the AI/ML models (B10).

The UE may perform AI/ML model management for switching or updating based on monitoring the at least one AI/ML model *(B15).*

Monitoring the at least one AI/ML model may include at least one of: monitoring a first AI/ML model in an inactive state; and monitoring a second AI/ML model in an active state.

Monitoring the first AI/ML model in the inactive state may occupy a UE processing unit for a shorter duration than monitoring the second AI/ML model in the active state or may occupy fewer UE processing units than monitoring the second AI/ML model in the active state.

The first AI/ML model to be monitored among AI/ML models in the inactive state may be determined based on network signaling.

A start of a time duration during which the UE processing unit is occupied by monitoring the first AI/ML model may be determined based on a time point at which the network signaling is received.

An end of a time duration during which the UE processing unit is occupied by monitoring the first AI/ML model may be determined based on at least one of: i) a time point at which a result of monitoring the first AI/ML model is reported; ii) a time point at which a network response to the report is received; or iii) a time point at which a predetermined timer expires.

The first AI/ML model to be monitored among AI/ML models in the inactive state may be determined by the UE.

Based on an operation for the second AI/ML model in the active state being triggered through network signaling, monitoring the AI/ML model in the inactive state may be stopped or suspended.

The UE may report information on an occupied state or an unoccupied state of the UE processing unit to the network.

Monitoring the first AI/ML model may be performed based on remaining UE processing units that are not occupied by the second AI/ML model in the active state.

The second AI/ML model in the active state may occupy the UE processing unit with a higher priority than the first AI/ML model in the inactive state.

Monitoring the second AI/ML model in the active state may occupy one UE processing unit, and monitoring the first AI/ML model in the inactive state may occupy n UE processing units, where n may be a real number greater than 0 and less than or equal to 1.

Here, n may be determined based on UE capability or may be provided through network signaling.

FIG. 21 illustrates a communication system 1 applied to the disclosure.

Referring to FIG. 21, a communication system 1 applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

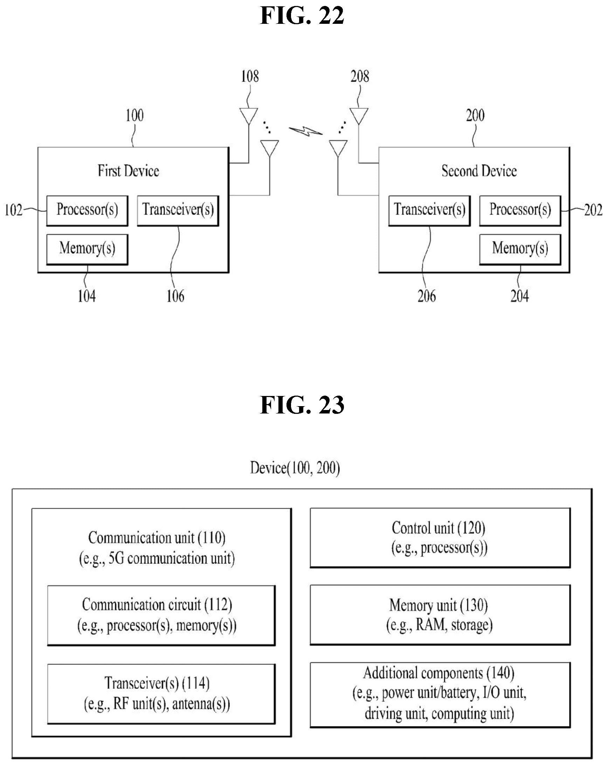

FIG. 22 illustrates wireless devices applicable to the disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 23 illustrates another example of a wireless device applied to the disclosure. The wireless device may be implemented in various forms according to a use-case/service (refer to FIG. 21).

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

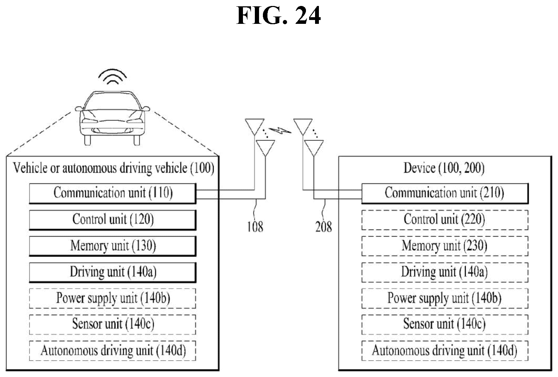

FIG. 24 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the disclosure in prescribed forms. In addition, the respective elements or features may be considered as selective unless they are explicitly mentioned. Each of the elements or features can be implemented in a form failing to be combined with other elements or features. Moreover, it is able to implement an embodiment of the disclosure by combining elements and/or features together in part. A sequence of operations explained for each embodiment of the disclosure can be modified. Some configurations or features of one embodiment can be included in another embodiment or can be substituted for corresponding configurations or features of another embodiment. In addition, it is apparently understandable that an embodiment is configured by combining claims failing to have relation of explicit citation in the appended claims together or can be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The disclosure is applicable to UEs, BSs, or other apparatuses in a wireless mobile communication system.

**Claims**

1.    A method performed by a user equipment (UE) in a wireless communication system, the method comprising:

obtaining configurations for artificial intelligence/machine learning (AI/ML) models based on higher layer signaling;
monitoring at least one of the AI/ML models; and
performing AI/ML model management for switching or updating based on monitoring the at least one AI/ML model,
wherein monitoring the at least one AI/ML model comprises at least one of:

monitoring a first AI/ML model in an inactive state; and
monitoring a second AI/ML model in an active state, and
wherein monitoring the first AI/ML model in the inactive state occupies a UE processing unit for a shorter duration than monitoring the second AI/ML model in the active state or occupies fewer UE processing units than monitoring the second AI/ML model in the active state.

2.    The method of claim 1, wherein the first AI/ML model to be monitored among AI/ML models in the inactive state is determined based on network signaling.

3.    The method of claim 2, wherein a start of a time duration during which the UE processing unit is occupied by monitoring the first AI/ML model is determined based on a time point at which the network signaling is received.

4.    The method of claim 2, wherein an end of a time duration during which the UE processing unit is occupied by monitoring the first AI/ML model is determined based on at least one of:

i) a time point at which a result of monitoring the first AI/ML model is reported;
ii) a time point at which a network response to the report is received; or

iii) a time point at which a predetermined timer expires.

5. The method of claim 1, wherein the first AI/ML model to be monitored among AI/ML models in the inactive state is determined by the UE.

6. The method of claim 5, wherein based on an operation for the second AI/ML model in the active state being triggered through network signaling, monitoring the AI/ML model in the inactive state is stopped or suspended.

7. The method of claim 1, further comprising reporting information on an occupied state or an unoccupied state of the UE processing unit to a network.

8. The method of claim 1, wherein monitoring the first AI/ML model is performed based on remaining UE processing units that are not occupied by the second AI/ML model in the active state.

9. The method of claim 1, wherein the second AI/ML model in the active state occupies the UE processing unit with a higher priority than the first AI/ML model in the inactive state.

10. The method of claim 1, wherein monitoring the second AI/ML model in the active state occupies one UE processing unit, and
wherein monitoring the first AI/ML model in the inactive state occupies n UE processing units, where n is a real number greater than 0 and less than or equal to 1.

11. The method of claim 10, wherein n is determined based on UE capability or is provided through network signaling.

12. A computer-readable recording medium having recorded thereon a program for executing the method of claim 1.

13. A user equipment (UE) in a wireless communication system, the UE comprising:

a transceiver; and
a processor configured to control the transceiver,
wherein the processor is configured to:

obtain configurations for artificial intelligence/machine learning (AI/ML) models based on higher layer signaling;
monitor at least one of the AI/ML models; and
perform AI/ML model management for switching or updating based on monitoring the at least one AI/ML model,
wherein monitoring the at least one AI/ML model comprises at least one of:

monitoring a first AI/ML model in an inactive state; and
monitoring a second AI/ML model in an active state, and
wherein monitoring the first AI/ML model in the inactive state occupies a UE processing unit for a shorter duration than monitoring the second AI/ML model in the active state or occupies fewer UE processing units than monitoring the second AI/ML model in the active state.

14. An apparatus configured to control a user equipment (UE) in a wireless communication system, the apparatus comprising:

a memory configured to store instructions; and
a processor configured to perform operations for controlling the UE by executing the instructions,
wherein the operations for controlling the UE comprise:

obtaining configurations for artificial intelligence/machine learning (AI/ML) models based on higher layer signaling;
monitoring at least one of the AI/ML models; and
performing AI/ML model management for switching or updating based on monitoring the at least one AI/ML model,
wherein monitoring the at least one AI/ML model comprises at least one of:

monitoring a first AI/ML model in an inactive state; and
monitoring a second AI/ML model in an active state, and
wherein monitoring the first AI/ML model in the inactive state occupies an apparatus processing unit for a shorter duration than monitoring the second AI/ML model in the active state or occupies fewer apparatus processing units than monitoring the second AI/ML model in the active state.

# FIG. 1

| Initial Cell Search | System Information Reception | Random Access Procedure | General DL/UL Tx/Rx |

- DL/UL ACK/NACK
- UE CQI/PMI/Rank Report using PUSCH and PUCCH

# FIG. 2

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

PDCCH

PUSCH

# FIG. 7

UE

BS

Configuration Information related to CSI (710)

RS(e.g., CSI-RS) (720)

Calculate CSI (730)

Report CSI (740)

# FIG. 8

# FIG. 9

Input Layer

Hidden Layer

Output Layer

# FIG. 10

# FIG. 11

4 Feature Maps

Input Image 36 X 36

28 X 28

14 X 14

Convolution
(Kernel: 9X9X1)

Max Pooling

# FIG. 12

Encoder      Decoder

# FIG. 13

Terminal device part
(Split AI operation/model)

Network part
(Split AI operation/model)

Actor

Intermediate
data

Inference
output

Terminal device

Network AI terminal device

# FIG. 14

# FIG. 15

**FIG. 16**

# FIG. 17

UE            RAN Node

1. Training data

2. Model training

3. Model deployment/update

4. Inference data

5. Model inference

6. Model performance feedback

7. Action

8. Feedback

# FIG. 18

Channel $H$ Measurement/Estimation → CSI Encoder → CSI Feedback → CSI Decoder → Approximate Channel info $\tilde{H}$

UE side            BS side

# FIG. 19

# FIG. 20

# FIG. 21

## FIG. 22

## FIG. 23

Device(100, 200)

# FIG. 24

## INTERNATIONAL SEARCH REPORT

| | International application No. |
|---|---|
| | **PCT/KR2024/095933** |

| A. | CLASSIFICATION OF SUBJECT MATTER |
|---|---|

**H04L 41/16**(2022.01)i; **G06N 3/0464**(2023.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04L 41/16(2022.01); G06F 1/14(2006.01); H04W 36/00(2009.01); H04W 36/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AI/ML(artificial intelligence/machine learning), 모델(model), 설정 (configuration), 모니터링(monitoring), 비활성(inactive), 활성(active), 프로세싱 유닛(processing unit)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | NTT DOCOMO, INC. Discussion on general aspects of AI/ML framework. R1-2305590, 3GPP TSG RAN WG1 #113. Incheon, Korea. 15 May 2023. <br> See sections 1, 2.4.2 and 2.6.1; and figure 6. | 1-14 |
| A | HUAWEI et al. Discussion on AI/ML for CSI feedback enhancement. R1-2304654, 3GPP TSG RAN WG1 #113. Incheon, Korea. 15 May 2023. <br> See sections 1-3.5.3. | 1-14 |
| A | LENOVO. Further aspects on AI/ML for beam management. R1-2303527, 3GPP TSG RAN WG1 #112bis-e. 07 April 2023. <br> See sections 1-3.4.2. | 1-14 |
| A | WO 2023-069534 A1 (INTEL CORPORATION) 27 April 2023 (2023-04-27) <br> See paragraphs [0036]-[0252]; and figures 1-16. | 1-14 |
| A | WO 2023-122576 A1 (GENERAL ELECTRIC COMPANY et al.) 29 June 2023 (2023-06-29) <br> See paragraphs [0079]-[0121]; and figures 1-8. | 1-14 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 November 2024** | **07 November 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | International application No.<br><br>**PCT/KR2024/095933** | |

| Patent document<br>cited in search report | Publication date<br>(day/month/year) | Patent family member(s) | Publication date<br>(day/month/year) |
|---|---|---|---|
| WO 2023-069534 A1 | 27 April 2023 | EP 4420407 A1 | 28 August 2024 |
| WO 2023-122576 A1 | 29 June 2023 | WO 2023-122592 A1 | 29 June 2023 |
|  |  | WO 2023-122654 A1 | 29 June 2023 |

Form PCT/ISA/210 (patent family annex) (July 2022)